# EUROPÄISCHE PATENTSCHRIFT

(11) **EP 1 576 066 B1**
(45) Veröffentlichungstag und Bekanntmachung des Hinweises auf die Patenterteilung: **23.05.2012**
(21) Anmeldenummer: 03778323.0
(22) Anmeldetag: 20.11.2003
(51) Int. Cl.: C09J 7/02, C08L 23/02, B60R 16/02

(54) **LEICHT REISSBARES WICKELBAND**
EASY-TO-TEAR WRAPPING TAPE
RUBAN DE GUIPAGE AISÉMENT DÉCHIRABLE

(30) Priorität: 19.12.2002 DE 10260072
(43) Veröffentlichungstag der Anmeldung: 21.09.2005
(73) Patentinhaber: TESA SE, 20253 Hamburg (DE)
(72) Erfinder: YUN, Petra, 20251 Hamburg (DE); MÜSSIG, Bernhard, 21218 Seevetal (DE)
(74) Vertreter: Stubbe, Andreas
(86) Internationale Anmeldenummer: PCT/EP2003/012976
(87) Internationale Veröffentlichungsnummer: WO 2004/056934

(56) Entgegenhaltungen:
- EP-A- 1 097 976
- DATABASE WPI Section Ch, Week 197408 Derwent Publications Ltd., London, GB; Class A17, AN 1974-14194V XP002275518 & JP 48 072238 A (NITTO ELECTRIC IND CO) 29. September 1973 (1973-09-29) in der Anmeldung erwähnt
- DATABASE WPI Section Ch, Week 200272 Derwent Publications Ltd., London, GB; Class A81, AN 2002-669031 XP002275519 & JP 2002 138262 A (EFUKO KK) 14. Mai 2002 (2002-05-14)
- DATABASE WPI Section Ch, Week 199650 Derwent Publications Ltd., London, GB; Class A14, AN 1996-502784 XP002275520 & JP 08 259704 A (SUMITOMO ELECTRIC IND CO) 8. Oktober 1996 (1996-10-08)

## Beschreibung

Die vorliegende Erfindung betrifft ein halogenfreies leicht reißbares Wickelband bestehend aus einer Folie sowie einer Klebstoffschicht. Das Wickelband ist zum Beispiel zum Umwickeln von Lüftungsleitungen in Klimaanlagen, Drähten oder Kabeln vorgesehen und ist insbesondere für Kabelbäume in Fahrzeugen oder Feldspulen für Bildröhren geeignet. Das Wickelband dient dabei zum Bündeln, Isolieren, Markieren, Abdichten oder Schützen. Des weiteren umfasst die Erfindung ein Verfahren zur Herstellung der erfindungsgemäßen Folie.

Kabelwickelbänder und Isolierbänder bestehen üblicherweise aus weichgemachter PVC-Folie mit einer einseitigen Haftklebstoffbeschichtung. Es besteht verstärkt der Wunsch, Nachteile dieser Produkte zu beseitigen. Entsprechende Nachteile beinhalten Ausdampfung von Weichmacher und hoher Halogengehalt.

Die Weichmacher konventioneller Isolierbänder und Kabelwickelbänder dampfen allmählich aus, was zu einer Gesundheitsbelastung führt, insbesondere ist das üblicherweise verwendete DOP bedenklich. Weiterhin schlagen sich die Dämpfe in Kraftfahrzeugen an den Scheiben nieder, was die Sicht (und damit erheblich die Fahrsicherheit) verschlechtert und vom Fachmann als Fogging (DIN 75201) bezeichnet wird. Bei noch stärkerer Verdampfung durch höhere Temperaturen, zum Beispiel im Motorinnenraum von Fahrzeugen oder bei Isolierbändern in elektrischen Geräten, versprödet das Wickelband durch den entstehenden Weichmacherverlust.

Weichmacher verschlechtern das Brandverhalten des reinen PVCs, was durch Zugabe von Antimonverbindungen, die toxisch sehr bedenklich sind, oder durch Verwendung chlor- oder phosphorhaltiger Weichmacher teilweise kompensiert wird.

Vor dem Hintergrund der Diskussion um Verbrennung von Kunststoffabfällen, zum Beispiel Shredderabfall aus dem Fahrzeugrecycling, besteht der Trend zur Reduktion des Halogengehaltes und damit der Dioxinreduzierung. Daher werden bei den Kabelisolierungen die Wandstärken und bei den zum Umwickeln verwendeten Bändern die Dicken der PVC-Folie reduziert. Die übliche Dicke der PVC-Folien für Wickelbänder beträgt 85 bis 200 µm. Unterhalb von 85· µm treten erhebliche Probleme im Kalanderprozess auf, so dass solche Produkte mit vermindertem PVC-Gehalt kaum verfügbar sind.

Die üblichen Wickelbänder enthalten Stabilisatoren auf Basis giftiger Schwermetalle, zumeist Blei, seltener Cadmium oder Barium.

Stand der Entwicklung zum Bandagieren von Leitungssätzen sind Wickelbänder mit und ohne Klebstoffbeschichtung, die aus einem PVC-Trägermaterial bestehen, das durch Einarbeitung von erheblichen Mengen (30 bis 40 Gew.-%) an Weichmacher flexibel eingestellt ist. Das Trägermaterial ist zumeist einseitig mit einer Selbstklebemasse auf Basis von SBR-Kautschuk beschichtet. Erhebliche Mängel dieser PVC-Wickelklebebänder sind ihre geringe Alterungsstabilität, das Auswandern und Verdunsten von Weichmacher, ihr hoher Halogengehalt sowie eine hohe Rauchgasdichte im Brandfall. In JP 10 001 583 A1, JP 05 250 947 A1, JP 2000 198 895 A1 und JP 2000 200 515 A1 werden typische Weich-PVGKlebebänder beschrieben. Um eine höhere Flammfestigkeit der Weich-PVC-Materialien zu erreichen, wird üblicherweise, wie zum Beispiel in JP 10 001 583 A1 beschrieben, die stark toxische Verbindung Antimonoxid verwendet.

Es gibt Bemühungen, statt Weich-PVC-Folie Gewebe oder Vliese zu verwenden, die daraus resultierenden Produkte werden aber in der Praxis nur wenig eingesetzt, da sie relativ teuer sind und sich in der Handhabung (zum Beispiel Handeinreißbarkeit, elastisches Rückstellvermögen) und unter Nutzungsbedingungen (zum Beispiel Beständigkeit gegen Betriebsflüssigkeiten, elektrische Eigenschaften) stark von den gewohnten Produkten unterscheiden, wobei im folgenden ausgeführt der Dicke eine besondere Bedeutung zukommt.

In DE 200 22 272 U1, EP 1 123 958 A1 und WO 99/61541 A1 sind Wickelklebebänder aus einem gewebe- oder vliesartigem Trägermaterial beschrieben. Diese Materialen zeichnen sich durch eine sehr hohe Reißfestigkeit aus. Daraus resultiert jedoch der Nachteil, dass diese Klebebänder bei der Verarbeitung nicht ohne Zuhilfenahme von Scheren oder Messern von Hand abgerissen werden können.

Reißbarkeit, Dehnbarkeit und Flexibilität sind die Hauptanforderungen an die Wickelklebebänder, um faltenfreie Wicklung und biegsame Kabelbäume herstellen zu können.

Im modernen Fahrzeugbau werden die Kabelbäume einerseits durch die Vielzahl der elektrischen Verbraucher und dem vermehrten lnformationstransfer innerhalb der Fahrzeuge immer dicker und steifer, während andererseits der Verbauraum immer stärker reduziert und somit die Montage (Durchführung beim Verlegen in der Karosserie) problematischer wird. Dadurch ist ein dünnes Folientape vorteilhaft. Des weiteren wird für eine effiziente und kostengünstige Kabelbaumherstellung von den Kabelwickelbändem eine leichte und schnelle Verarbeitbarkeit erwartet.

Wickelbänder auf Basis von Weich-PVC-Folien werden in Automobilen zur Bandagierung von elektrischen Leitungen zu Kabelbäumen eingesetzt. Stand in den Anfängen der technischen Entwicklung die Verbesserung der elektrischen Isolation bei Verwendung dieser ursprünglich als Isolierbänder entwickelten Wickelbänder im Vordergrund, müssen derartige Kabelsatzbänder mittlerweile weitere Funktionen erfüllen, wie die Bündelung und dauerhafte Fixierung einer Vielzahl von Einzelkabeln zu einem stabilen Kabelstrang, sowie den Schutz der Einzelkabel und des gesamten Kabelstrangs gegen mechanische, thermische und chemische Schäden.

In DE 199 10 730 A1 wird ein Laminatträger beschrieben, der aus Velours oder Schaumstoff und einem Vlies besteht, welcher mittels eines doppelseitigen Klebebandes oder mit einem Schmelzkleber adhäsiv verbunden ist.

EP 0 886 357 A2 beschreibt eine dreilagige Schutzummantelung aus einem Spinnfaservlies, einem PET-Gewirke sowie einem Schaumstoff- oder Filzstreifen, die zusammenkaschiert sind, wobei die Schutzummantelung zusätzlich noch sehr aufwendig mit Klebestreifen und Klettverschlusssystemen zumindest partiell versehen ist.

In EP 1 000 992 A1 wird ein gelochtes Baumwolle-Vlies mit einer 10 bis 45 µm dicken Polyethylenbeschichtung sowie einer zusätzlichen Releasebeschichtung beschrieben.

Die DE-G 94 01 037 beschreibt ein Klebeband mit einem bandförmigen, textilen Träger, der aus einem Nähvlies besteht, das seinerseits aus einer Vielzahl parallel zueinander laufender, eingenähter Nähte gebildet wird. Das hier vorgeschlagene Vlies soll bei einem Flächengewicht von 50 bis 200 g/m² eine Dicke von 150 bis 400 µm aufweisen.

Die DE 44 42 092 C1 beschreibt ein Klebeband auf Nähvliesbasis, das auf der Trägerrückseite beschichtet ist. Der DE 44 42 093 C1 liegt die Verwendung eines Vlieses als Träger für ein Klebeband zugrunde, das durch die Bildung von Maschen aus den Fasern des Vlieses verstärktes Querfaservlies entsteht, also ein dem Fachmann unter dem Namen Malivlies bekanntes Vlies. Die DE 44 42 507 C1 offenbart ein Klebeband zur Kabelbandagierung, jedoch basiert es auf sogenannten Knit- beziehungsweise Multiknetvliesen. In allen drei Dokumenten werden dabei Vliese eingesetzt, die ein Flächengewicht von ungefähr 100 g/m² aufweisen, wie man den Beispielen entnehmen kann.

Aus der DE 195 23 494 C1 ist die Verwendung eines Klebebandes mit einem Träger aus Vliesmaterial einer Dicke von 400 bis 600 µm zum Bandagieren von Kabelbäumen bekannt, das einseitig mit einem Kleber beschichtet ist.

Aus der DE 199 23 399 A1 ist ein Klebeband mit einem bandförmigen Träger aus Vliesmaterial bekannt, das zumindest einseitig mit einem Kleber beschichtet ist, wobei das Vlies eine Dicke von 100 µm bis 3000 µm, insbesondere 500 bis 1000 µm aufweist.

Derartig dicke Vliese machen die Kabelbäume noch dicker und unflexibler als klassische PVC-Tapes, auch wenn dies sich positiv auf die Schalldämmung auswirkt, was nur in einigen Bereichen von Kabelbäumen von Vorteil ist. Vliese sind aber wenig dehnbar und weisen praktisch kein Rückstellvermögen auf. Dies ist von Bedeutung, da dünne Äste von Kabelbäumen so stramm gewickelt sein müssen, dass sie beim Einbau nicht schlaff herunterhängen und sich leicht vor dem Anclipsen und Anbau der Stecker positionieren lassen.

Ein weiterer Nachteil von Textilklebebändern ist die geringe Durchschlagspannung von ca. 1 kV, weil nur die Klebstoffschicht isoliert. Folienbänder hingegen liegen über 5 kV, sie sind gut spannungsbeständig.

Wickelbänder und Kabelisolierungen aus thermoplastischem Polyester wurden versuchsweise zur Herstellung von Kabelbäumen verwendet. Diese weisen erhebliche Mängel bezüglich ihrer Flexibilität, Verarbeitbarkeit, Alterungsbeständigkeit oder Kompatibilität zu den Kabelmaterialen auf. Der schwerwiegendste Nachteil von Polyester ist jedoch die erhebliche Hydrolyseempfindlichkeit, so dass ein Einsatz aus Sicherheitsgründen in Automobilen nicht in Frage kommt.

In DE 100 02 180 A1, JP 10 149 725 A1, JP 09 208 906 A1 und JP 05 017 727 A1 wird der Einsatz von halogenfreien thermoplastischen Polyester-Trägerfolien beschrieben. In JP 07 150 126 A1 wird eine flammwidrige Wickelfolie aus einer Polyester-Trägerfolie beschrieben, welche ein bromiertes Flammschutzmittel enthält.

In der Patentliteratur werden auch Wickelbänder aus Polyolefinen beschrieben. Diese enthalten entweder halogenhaltige Flammschutzmittel oder sehr hohe Mengen an Füllstoffen, welche eine geringe Flexibilität, Weißbruch bei Dehnung und sehr geringe Reißfestigkeit verursachen.

In der WO 00/71634 A1 wird ein Wickelklebeband beschrieben, dessen Folie aus einem Ethylen-Copolymer als Basismaterial besteht. Die Trägerfolie enthält das halogenhaltige Flammschutzmittel Decabromdiphenyloxid. Die Folie erweicht jedoch schon unterhalb einer Temperatur von 95 °C.

In der WO 97/05206 A1 wird ein halogenfreies Wickelklebeband beschrieben, dessen Trägerfolie aus einem Polymerblend aus Polyethylen niederer Dichte und einem Ethylen/Vinylacetat- oder einem Ethylen/Acrylat-Copolymer besteht. Als Flammschutzmittel werden 20 bis 50 Gew.-% Aluminiumhydroxid oder Ammoniumpolyphosphat verwendet. Ein erheblicher Nachteil der Trägerfolie ist wiederum eine Erweichungstemperatur unter 100 °C. Um dem entgegen zu wirken, wird die Verwendung von Silan-Vernetzern beschrieben. Der Erfindungsgegenstand weist außerdem geringe Flexibilität, Weißbruch bei Dehnung und sehr geringe Reißfestigkeit auf.

Analoge Probleme treten auch bei den nachfolgend aufgeführten füllstoffhaltigen Isolierklebebändern auf.

WO 99/35202 A1 und US 5,498,476 A1 beschreiben eine Trägerfolienmaterial aus einem Blend von EPDM und EVA in Kombination mit Ethylendiaminphosphat als Flammschutzmittel. Dieses weist wie auch Ammoniumpolyphosphat eine hohe Hydrolyseempfindlichkeit auf. In Kombination mit EVA tritt zudem eine Versprödung bei Alterung auf. Die beschriebenen Isolierbänder sind für Kabelbaumwickelbänder zu dick und viel zu unflexibel.

Die EP 0 953 599 A1 beansprucht eine Polymermischung aus LLDPE und EVA für Anwendungen als Kabelisolierungen und als Folienmaterial. Als Flammschutzmittel wird eine Kombination aus Magnesiumhydroxid mit spezieller Oberfläche und rotem Phosphor beschrieben.

Eine sehr ähnliche Kombination wird in der EP 1 097 976 A1 beschrieben. Hier wird anstatt dem LLDPE ein PP-Polymer verwendet. Nachteil ist jedoch die daraus resultierende geringe Flexibilität. Für die Abmischung mit EVA oder EEA wird behauptet, dass die Folie eine hinreichende Flexibilität aufweist. Dem Fachmann ist jedoch aus der Literatur bekannt, dass diese Polymere zur Verbesserung des Flammschutzes mit Polypropylen abgemischt werden. Die beschriebenen Produkte weisen eine Foliendicke von 0,2 mm auf, allein diese Dicke schließt bei gefüllten Polyolefinfolien eine hohe Flexibilität aus, da diese in der 3. Potenz von der Dicke abhängt. Das beschriebene Verfahren der Extrusion ist bei den extrem niedrigen Schmelzindices der verwendeten Polypropylene, wie dem Fachmann bekannt, auf einer Produktionsanlage kaum durchführbar, erst recht nicht für eine praxisgerechte dünne Folie und erst recht nicht bei Verwendung in Kombination mit den beschriebenen hohen Mengen an Füllstoff.

Die JP 2001 049 208 A1 beschreibt eine öl- und wärmebeständige Folie für ein Klebeband, bei welcher beide Schichten aus einer Mischung von EVA oder EEA, Peroxidvernetzer, Silanvernetzer, Katalysator für die Silanolkondensation und Flammschutzmittel zusammengesetzt sind und eine der Schichten zusätzlich Polypropylen enthält. Diese Folie löst weder das Problem der geringen Flexibilität einer gefüllten Polypropylenfolie noch das der hohen Anforderungen an die Alterungsbeständigkeit.

JP 09 310 048 A1 beschreibt einen Folienträger aus Polyolefin, Flammschutzmittel, HALS-Lichtschutzmittel und Hydrotalcit als Säurefänger für das EVA. Diese Folie hat weder eine hohe Flexibilität noch eine hohe Alterungsbeständigkeit zum Ziel.

Die genannten Patentschriften zum Stand der Technik führen trotz der genannten Nachteile keine Folien auf, die auch noch die weiteren Anforderungen wie Handeinreißbarkeit, Flexibilität, Wärmebeständigkeit, Kompatibilität mit Polyolefinkabelisolierungen, Vermeidung von Weißbruch beim Dehnen oder hinreichender Abrollkraft lösen. Darüber hinaus bleiben die Verarbeitbarkeit in Folienherstellprozessen und Fogging-Werte fraglich. Die mit Salzen wie Ammoniumpolyphosphat oder Hydroxiden wie Magnesium- oder Aluminiumhydroxid gefüllten Folien weisen eine gewisse Leitfähigkeit auf und ergeben dadurch Durchschlagsspannungen von etwa 3 kV/100 µm. Zur Verbesserung der Handreißbarkeit von Polyolefinfolien kann man neben Flammschutzmittein auch andere Füllstoffe wie Kreide oder Talkum verwenden, welche aber ebenfalls Reißfestigkeit und Durchschlagsspannung erheblich vermindern.

Copolymere mit ionogenen Gruppen sind für andere Anwendungen mit Haftklebern erwähnt worden. Auch wenn es sich dabei nicht um Wickelbänder handelt und derartige Copolymere nicht zum Zweck eines leicht einreißbaren und flexiblen Produktes eingesetzt werden, soll darauf eingegangen werden.

Die US 6,045,882 A beschreibt eine geblasene und anschließend biaxial versteckte mehrschichtige Folie, welche vorzugsweise ein ionogenes Polymer enthält. Sie zeichnet sich durch besonders hohe Reißfestigkeit, niedrigen Reibungskoeffizienten und Transparenz aus.

Die WO 01/00480 A1 beschreibt eine Verpackung aus einer reißfesten Folie aus Polyethylen und einem hochreißfestem Klebeband (Aufreißstreifen). Das Polyethylen ist in einer speziellen Ausführungsform ein ionogenes Ethylencopolymer.

Die JP 48 072 238 A beschreibt ein Klebeband aus einer verstreckten Polypropylenfolie, welcher ein Ethylenpolymer, vorzugsweise ein ionogen modifiziertes, zur Erhöhung der Reißfestigkeit der Folie zugemischt ist.

In der JP 2002 138 262 A wird ein Wickelband mit einer Folienschicht und mit einer Klebemassenschicht beschrieben.

Die Folie ist eine Mischung aus einem Copolymer aus einem α-Olefin der Formel R-CH=CH₂, wobei R Wasserstoff oder ein Alkylrest mit 1 bis 10 Kohlenstoffatomen ist, und einer α,ß-ethylenisch ungesättigten Carbonsäure. Dazu kommen eine PE/PP-Kautschuk und Polypropylen.

JP 08 259 704 beschreibt Tubes zum mechanischen Schutz von Kabeln oder Rohrleitungen. Solche Tubes werden mit Wickelband auf den Kabeln fixiert. Die Tubes enthalten lonomer und 2 bis 20 % Weichmacher, das heißt ziwschen 80 und 98 % lonomer.

Die JP 56 109 274 A1 beschreibt ein Klebeband aus einer Folie aus einem Copolymer aus Propylen und Methylpenten, bei dem eine Schicht aus ionisch modifiziertem Polyolefin als Haftvermittler zu einem Hotmelt-Klebstoff dient.

Die WO 01/85444 A1 beschreibt ein Klebeband aus einer harten Folie (Aluminium, metallisiertes Polyester oder Polyimid), einer weichen Schicht (zum Beispiel Polyurethan oder Polyethylen, wobei letztere auch EVA oder Ethylencopolymere mit ionogenen Gruppen einschließt) und einer Klebstoffschicht. Besonderes Kennzeichen der Erfindung ist eine besonders hohe elektromagnetische Abschirmung (EMI) und Spannungsbeständigkeit. Die geringe Flexibilität der harten Folie wird durch eine Prägung verbessert. Der Erfindungsgegenstand ist nicht leicht reißbar.

Die WO 01/44398 A1 beschreibt ein Klebeband mit einer Folie aus einer Polymermischung. Die eine Komponente besteht aus einem der marktüblichen thermoplastischen Polymeren, die andere aus einem thermoplastischen Elastomer (zum Beispiel Polyamid, Polyurethan, Polyolefin, wobei diese auch ionogene Gruppen enthalten kann). Eine Einreißbarkeit ist durch die Rohstoffe nicht gegeben, sondern wird durch monoaxiale Verstreckung der Folie mit nachfolgender Aufbringung einer speziellen Prägung erreicht.

Die WO 92/20534 A1 beschreibt eine selbstklebende Tapete mit einer Außenschicht aus ionomerem Polyolefin mit hohem Schmelzindex und Füllstoff, auf welcher dekorative Stanzlinge reversibel befestigt werden können.

Es gibt eine Anzahl von Folienklebebändern für Verpackungszwecke, die jedoch nicht als Wickelband geeignet sind. Im Fall von Polyester- oder orientierten Polypropylen-Trägern weisen sie eine sehr geringe Flexibilität auf. Nicht verstreckte Polyethylen- oder Polypropylen-Träger (aus Cast- oder Blasprozess) können durchaus hinreichend flexibel sein, sind jedoch nicht handeinreißbar und oder sauber abreißbar (hohe Bruchdehnungen) wie selbst dem Nichtfachmann von Haushaltsbeuteln oder Tragetaschen bekannt ist.

Die Aufgabe bleibt daher das Auffinden einer Lösung für ein Wickelband, welche die Vorteile der leichten Reißbarkeit, Flexibilität, Abriebfestigkeit, hohe Durchschlagsspannungsbeständigkeit, Weißbruchfreiheit und sonstige mechanischen von hochwertigen PVC-Wickelbändern mit der Halogenfreiheit von textilen Wickelbändern verbindet und darüber hinaus eine überlegene Wärmealterungsbeständigkeit aufweist, wobei eine großtechnische Produzierbarkeit des Wickelbandes sichergestellt sein muss und ein hoher Fogging-Wert bei einigen Anwendungen notwendig ist.

Aufgabe vorliegender Erfindung ist es, flexible halogenfreie leicht reißbare Wickelbänder zur Verfügung zu stellen, welche ein besonders sicheres und schnelles Umwickeln, insbesondere von Drähten und Kabeln, zum Markieren, Schützen, Isolieren, Abdichten oder Bündeln ermöglichen, wobei die Nachteile des Standes der Technik nicht oder zumindest nicht im bekannten Umfang auftreten.

Im Zuge der immer komplizierter werdenden Elektronik und der steigenden Zahl von elektrischen Verbrauchern in den Automobilen werden auch die Leitungssätze immer komplexer. Bei steigenden Querschnitten der Kabelbäume wird die induktive Erhitzung immer größer, während die Wärmeableitung abnimmt. Dadurch steigen die Anforderungen an die Wärmebeständigkeit der verwendeten Materialien. Die standardmäßig verwendeten PVC-Materialien für die Wickelklebebänder stoßen hier an ihre Grenzen. Es besteht daher auch die Aufgabe ein Trägerfolienmaterial zu finden, welche die Wärmebeständigkeit von PVC nicht nur erreicht, sondern sogar übertrifft.

Gelöst wird diese Aufgabe durch ein Wickelband, wie sie im Hauptanspruch niedergelegt ist. Gegenstand der Unteransprüche sind vorteilhafte Weiterbildungen des erfindungsgemäßen Wickelbandes, Anwendungen desselben sowie Verfahren zur Herstellung des Wickelbandes.

Demgemäss betrifft die Erfindung ein leicht reißbares halogenfreies Wickelband bestehend aus einer Folie sowie einer Klebstoffschicht. Die Folie enthält ein Copolymer aus
(a) α-Olefin der Formel R-CH=CH₂, wobei R Wasserstoff oder ein Alkylrest mit 1 bis 10 Kohlenstoffatomen ist, und
(b) eine α,ß-ethylenisch ungesättigte Carbonsäure aus 3 bis 8 Kohlenstoffatomen sowie
(c) optional ein weiteres monoethylenisch ungesättigtes Monomer, wobei die Wasserstoffatome der Carbonsäuregruppen des Copolymers zu 10 bis 90 % durch Neutralisation durch Metallionen substituiert sind,
wobei der Anteil an Copolymer in der Folie mindestens 50 Gew.-% beträgt und wobei die Folienschicht des Wickelbandes vernetzt ist, vorzugsweise durch ionisierende Strahlung oder Modifizierung eines Polymers mit Silangruppen und wobei die Folienschicht durch Blasextrusion hergestellt ist.

Die Dicke des erfndungsgemäßen Wickelbandes liegt im Bereich von 30 bis 180 µm, bevorzugt 50 bis 150 µm, insbesondere 55 bis 100 µm. Die Oberfläche kann strukturiert oder glatt sein. Vorzugsweise ist die Oberfläche leicht matt eingestellt. Dies kann durch Verwendung eines Füllstoffs mit einer hinreichend hohen Teilchengröße oder durch eine Walze (zum Beispiel Prägewalze am Kalander oder mattierte Chill Roll oder Prägewalze bei der Extrusion) erreicht werden.

Das Wickelband ist vorzugsweise mit einer haftklebrigen Schicht ausgerüstet. In einer besonderen Ausführungsform kann die Folie auch ohne Klebstoff gewickelt werden, wobei jedoch eine Fixierung des Wickelbandes am Ende des Wickelvorgangs mit einem Klebeband erfolgen sollte.

Erstaunlicherweise ist auch die thermische Alterungsbeständigkeit im Vergleich zu PVC als Hochleistungswerkstoff nicht schlechter sondern vergleichbar oder sogar besser.

Das erfindungsgemäße Wickelbande ist im wesentlichen frei von flüchtigen Weichmachern wie zum Beispiel DOP oder TOTM und hat daher ein ausgezeichnetes Brandverhalten und geringe Emission (Weichmacherausdampfung, Fogging).

Für den Fachmann überraschend und nicht vorhersehbar ist ein solches Wickelband aus einer Folie sowie einer Klebstoffschicht herstellbar, wobei die Folie ein Copolymer aus
(a) α-Olefin der Formel R-CH=CH₂, wobei R Wasserstoff oder ein Alkylradikal mit 1 bis 10 Kohlenstoffatomen ist, und
(b) eine α,ß-ethylenisch ungesättigte Carbonsäure aus 3 bis 8 Kohlenstoffatomen sowie
(c) optional ein weiteres monoethylenisch ungesättigtes Monomer, wobei die Wasserstoffatome der Carbonsäuregruppen des Copolymers zu 10 bis 90 % durch Neutralisation durch Metallionen substituiert sind, enthält,
wobei der Anteil an Copolymer in der Folie mindestens 50 Gew.-% beträgt und wobei die Folienschicht des Wickelbandes vernetzt ist, vorzugsweise durch ionisierende Strahlung oder Modifizierung eines Polymers mit Silangruppen und wobei die Folienschicht durch Blasextrusion hergestellt ist.

Durch Vernetzung ist das Wickelband sogar unschmelzbar. Dies ist durch ionisierende Strahlung wie Elektronen- oder γ-Strahlung oder Peroxide möglich. Eine weitere Möglichkeit besteht darin, das Copolymer oder ein Polymer einer optionalen Coextrusionsschicht mit Silangruppen zu modifizieren welche durch Einwirkung von (Luft-) Feuchtigkeit zu Vernetzung führen.

Die mechanischen Eigenschaften des erfindungsgemäßen Wickelbandes liegen in md (Maschinenrichtung) bevorzugt in den folgenden Bereichen:
- Kraft bei 1 %-Dehnung 0,6 bis 4 N/cm auf, besonders bevorzugt 1 bis 3 N/cm
- Kraft bei 100 %-Dehnung 5 bis 20 N/cm, besonders bevorzugt 8 bis 12 N/cm.
- Reißdehnung von 200 bis 1000 %, besonders bevorzugt von 300 bis 400 %,
- Reißkraft im Bereich von 6 bis 40 N/cm, besonders bevorzugt von 8 bis 15 N/cm, wobei die Folie zur Ermittlung der Daten mit scharfen Klingen zugeschnitten wurde.

Die Kraft bei 1 % Dehnung ist ein Maß für die Steifigkeit der Folie, und die Kraft bei 100 % Dehnung ist ein Maß für die Anschmiegsamkeit beim Wickeln bei starker Deformation durch hohe Wickelspannung. Die 100 %-Kraft darf aber auch nicht zu niedrig liegen, weil sonst die Reißfestigkeit zu gering ist.

Die Durchschlagsspannung liegt vorzugsweise bei mindestens 5 kV/100 µm.

Die Herstellung des Wickelbandes erfolgt durch Blasextrusion. Vorgenanntes Verfahren ist zum Beispiel in Ullmann's Encyclopedia of Industrial Chemistry, 6. Auflage, Wiley-VCH 2002 beschrieben.

Besonders bevorzugt ist die Verarbeitung durch Blasextrusion, da die Trägerfolie sich in Querrichtung besonders leicht abreißen lässt. In einer bevorzugten Ausführung der Blasextrusion werden die Verarbeitungsparameter so eingestellt, dass die Reißfestigkeit in Längsrichtung mindestens das Doppelte, vorzugsweise mindestens das Vierfache der Reißfestigkeit in Querrichtung beträgt, wobei die Reißfestigkeit nach Elmendorf bestimmt wird.

Bevorzugte Verarbeitungsparameter sind:
- Längsstreckverhältnis (Verhältnis Wickelgeschwindigkeit der Folie zu Geschwindigkeit der Schmelze in der Düse) von 2 bis 25, vorzugsweise von 5 bis 10.
- Frostlinie kleiner als 160 cm.
- Das Längsstreckverhältnis dividiert durch Frostlinie ist größer als 0,1 cm⁻¹ vorzugsweise größer als 0,2 cm⁻¹
- Das Aufblasverhältnis liegt im Bereich von 1 bis 4, vorzugsweise von 1,8 bis 2,5.
- Der Düsenspalt liegt im Bereich von 1 bis 1,6 mm.

Die Herstellung solcher, erfindungsgemäß verwendeter Copolymere ist zum Beispiel in der US 3,264,272 A1 beschrieben.

Der Begriff Copolymer ist dahingehend zu verstehen, dass es auch mehrere unterschiedliche α-Olefine oder ungesättigte Carbonsäuren enthalten kann. Das ungesättigte α-Olefin ist vorzugsweise Ethylen, Propylen oder Buten-(1), besonders bevorzugt Ethylen. Die ungesättigte Carbonsäure kann eine Mono- oder Dicarbonsäure wie Methacrylsäure oder Maleinsäure sein. Die Metallionen sind vorzugsweise ein- bis dreiwertig, zum Beispiel aus den Gruppen I, II ,III, IV-A und VII des Periodensystems, besonders bevorzugt aus der Gruppe der Alkalimetalle, insbesondere Natrium.

Die Folienschicht des Wickelbandes kann neben dem erfindungsgemäßen Copolymer andere Polymere enthalten, wobei der Anteil an erfindungsgemäßem Copolymer mindestens 50 Gew.-% beträgt. Bei mehreren Folienschichten soll bevorzugt mindestens eine diesen Anteil enthalten.

Eine optionale Abmischkomponente sollte in einer weiteren bevorzugten Ausführungsform bei 190 °C keinen wesentlich höheren Schmelzindex aufweisen als das erfindungsgemäße Copolymer sondern bevorzugt einen niedrigeren. Geeignete Abmischkomponenten sind zum Beispiel weiche Ethylencopolymere wie LDPE, LLDPE, MDPE, HDPE, Metallocen-PE, EPM oder EPDM vorzugsweise mit einer Dichte von 0,86 bis 0,96 g/cm³. Polybuten(1)- oder weiche Polybuten- oder Polypropylencopolymere mit Random- oder Blockstruktur sind ebenfalls geeignet, weisen jedoch vorzugsweise einen Kristallitschmelzpunkt von weniger als 145 °C auf. Bevorzugt werden Polymere auf Ethylenbasis.

Durch Abmischung stickstoff- oder sauerstoffhaltigen Polymeren kann das Brandvermögen von olefinhaltigen Polymeren reduziert werden. Dies gilt auch für das erfindungsgemäße Wickelband. Beispiele dafür sind Ethylencopolymere enthaltend carbonylgruppenhaltige Monomere wie Ethylenacrylat (zum Beispiel EMA, EBA, EEA, EAA) oder Ethylenvinylacetat. Darüber hinaus wird beansprucht, dass auch Polyethylenvinylalkohol und olefinfreie stickstoff- oder sauerstoffhaltige Polymere zur Reduzierung des Brandvermögens geeignet sind, zum Beispiel in Form von Polyamiden und Polyestern mit hinreichend niedrigem Erweichungspunkt (passend zur Verarbeitungstemperatur des Copolymers), Polyvinylacetat, Polyvinylbutyral, Vinylacetatvinyalkoholcopolymer und Poly(meth)acrylate. Bevorzugt werden Polyvinylacetat und weiche Poly(meth)acrylate, die auch vernetzt sein können. Diese können auch eine Core-Shell-Struktur aufweisen, beispielweise ein Kern aus Polyacrylaten von Alkoholen mit 2 bis 8 Kohlenstoffatomen und einer Hülle aus Polymethylmethacryat. Insbesondere stellen sich Acrylat-Impact-Modifier, welche für die Modifizierung von PVC hergestellt werden, als besonders geeignet heraus, da sie schon in kleinen Mengen eine deutliche Verbesserung des Brandverhaltens bewirken, dabei die Flexibilität des Wickelbandes nicht wesentlich beeinträchtigen und trotz ihrer Polarität die Haftung der Schmelze auf Kalander- oder Kühlwalzen nicht erhöhen. In einer bevorzugten Ausführungsform liegt der Anteil an Sauerstoff oder Stickstoff bezogen auf das Gesamtgewicht an allen Polymeren zwischen 0,5 und 5 Gew.-%.

In einer speziellen Ausführungsform weist das Wickelband mehrere Folienschichten auf, wobei sich als Coextrusionsschichten die als Abmischkomponenten genannten Polymere, insbesondere stickstoff- oder sauerstoffhaltige Polymere und Polymere auf Ethylenbasis eignen. Das anteilsmäßig größte Polymer in einer solchen Coextrusionsschicht soll einen Schmelzindex von weniger als 10 g/10 min, vorzugsweise weniger als 6 g/10 min aufweisen (2,16 kg, 190 °C).

Als Abmischkomponente des erfindungsgemäßen Copolymers oder als Hauptbestandteil einer Coextrusionsschicht werden Ethylenvinylacetat- und Ethylenacrylatcopolymere besonders bevorzugt.

Das Wickelband enthält nicht zwangsläufig, aber vorzugsweise ein Flammschutzmittel. Wird es um einen isolierten Draht, ein Kabel oder ein metallisches Lüftungsrohr gewickelt, ist der Verbund in der Regel selbstverlöschend, da die Wärme durch das Metall abgeführt wird. Bei Drähten oder Kabeln wird bei erhöhten Anforderungen eine flammfest ausgerüstete Isolierung verwendet, dabei wird das Brandverhalten durch das erfindungsgemäße Wickelband nicht oder nur wenig verschlechtert. Dies gilt insbesondere dann, wenn stickstoff- oder sauerstoffhaltige Polymere in der Trägerfolie mitverwendet werden oder wenn das Wickelband in mindestens einer Folieschicht oder in der haftklebrigen Schicht ein Flammschutzmittel enthält. Dafür kommen nur halogenfreie Materialien in Frage, das sind beispielsweise Füllstoffe wie Polyphosphate, Carbonate und Hydroxide des Aluminiums oder des Magnesiums, Borate, Stannate, Flammschutzmittel auf Stickstoffbasis wie Melamincyanurat, Dicyandiamid, roter Phosphor oder sterisch gehinderte Amine wie zum Beispiel die Klasse der HA(L)S.

Weitere bei Folien übliche Additive wie Füllstoffe, Pigmente, Alterungsschutzmittel, Nukleierungsmittel, Impactmodifier oder Gleitmittel und andere können zur Herstellung verwendet werden. Diese Additive werden zum Beispiel im "Kunststoff Taschenbuch" Hanser Verlag, Hrsg. H. Saechtling, 28. Ausgabe oder "Plastic Additives Handbook", Hanser-Verlag, Hrsg. H. Zweifel, 5. Auflage beschrieben. In den folgenden Ausführungen wird zur Vermeidung von schwer verständlichen chemischen Namen die jeweilige CAS-Reg.Nr. verwendet.

Die vorliegende Erfindung hat hauptsächlich die Abwesenheit von Halogenen und flüchtigen Weichmachern zum Ziel. Wie ausgeführt steigen die thermischen Anforderungen, so dass zusätzlich eine erhöhte Beständigkeit gegenüber konventionellen PVC-Wickelbändern oder den in Erprobung befindlichen PVC-freien Wickelbändern erreicht werden soll. Daher wird die vorliegende Erfindung diesbezüglich im folgenden ausführlich beschrieben.

Das erfindungsgemäße Wickelband weist eine Wärmestabilität von mindestens 85 °C vorzugsweise 105 °C nach 3000 Stunden auf, das heißt, dass nach dieser Lagerung noch eine Bruchdehnung von mindestens 100 % vorhanden ist. In einer hervorragenden Ausgestaltung unter Verwendung der weiter unten beschriebenen Antioxidantien sowie hinreichend hochschmelzenden Coextrusionsschichten oder Vernetzung können 125 °C nach 3000 Stunden ohne Versprödung oder Schmelzen erreicht werden. Klassische PVC-Wickelfolien auf DOP-Basis weisen eine Wärmestabilität von 85 °C (Passagierraum) auf, Hochleistungsprodukte auf der Basis von Polymerweichmachern erreichen 105 °C (Motorraum).

Darüber hinaus muss das Wickelband mit einer Kabelummantelung auf Polyolefinbasis verträglich sein, das heißt, nach Lagerung des Verbundes Kabel/Wickelband darf weder eine Versprödung des Wickelbandes noch der Kabelisolierung auftreten. Durch die Auswahl eines oder mehrerer passender Antioxidantien können eine Verträglichkeit bei 105 °C vorzugsweise bei 125 °C (2000 Stunden, insbesondere 3000 Stunden erreicht werden. Entscheidend ist jedoch die Alterungsstabilisierung zur Erreichung der oxidativen Beständigkeit, was insbesondere durch sekundäre Antioxidantien wie Thioestern oder Phosphiten erreicht werden kann.

Eine Verträglichkeit zwischen Wickelband und den übrigen Kabelbaumkomponenten wie Steckern und Rillrohren ist ebenfalls wünschenswert und gleichfalls durch Anpassung der Rezepturen, insbesondere bezüglich der verwendeten Additive, zu erreichen. Als Negativbeispiel sei die Kombination eines ungeeigneten Polyolefinwickelbandes mit einem kupferstabilisierten Polyamidrillrohr aufgeführt, in diesem Fall sind sowohl das Rillrohr als auch das Wickelband vor dem Erreichen von 3000 Stunden 105 °C versprödet.

Zur Erreichung einer hohen Alterungsstabilität und Verträglichkeit mit den übrigen Kabelbaumkomponenten fällt der Verwendung der richtigen Alterungsschutzmittel eine besondere Rolle zu. Dabei ist auch die Gesamtmenge an Stabilisator zu berücksichtigen, da bei den bisherigen Versuchen zur Herstellung solcher Wickelbänder keine oder nur weniger als 0,3 phr Alterungsschutzmittel verwendet wurden, wie es auch bei Herstellung sonstiger Folien üblich ist. Die erfindungsgemäßen Wickelbänder enthalten in der bevorzugten Ausführungsform mehr als 0,3 und insbesondere mehr als 1 phr Antioxidant (worin ein optional verwendeter Metalldesaktivator nicht eingerechnet ist). In einer bevorzugten Ausführungsform liegt der Anteil an sekundärem Antioxidant bei mehr als 0,3 phr. Stabilisatoren für PVC-Produkte lassen sich nicht auf Polyolefine übertragen. Sekundäre Antioxidantien bauen Peroxide ab und werden daher zum Beispiel bei Dienelastomeren als Teil von Alterungsschutzpaketen verwendet. Überraschend wurde gefunden, dass eine Kombination von primären Antioxidantien (zum Beispiel sterisch gehinderten Phenolen oder C-Radikalfängern wie CAS 181314-48-7) und sekundären Antioxidantien (zum Beispiel Schwefelverbindungen, Phosphiten oder sterisch gehinderten Aminen), wobei die beiden Funktionen auch in einem Molekül vereinigt sein können, die Aufgabe auch bei dienfreien Polyolefinen wie Polypropylen löst. Vor allem wird die Kombination von primärem Antioxidant, vorzugsweise sterisch gehinderten Phenolen mit einem Molekulargewicht von mehr als 500 g/mol (vor allem > 700 g/mol), mit einem phosphitischen sekundären Antioxidant (vor allem mit einem Molekulargewicht > 600 g/mol) bevorzugt. Phosphite oder eine Kombination aus primären und mehreren sekundären Alterungsschutzmitteln werden bei Wickelbändern aus Polyolefinen bisher nicht eingesetzt. Insbesondere ist die Kombination aus einem wenig flüchtigen primären phenolischen Antioxidant und jeweils einem sekundären Antioxidant aus der Klasse der Schwefelverbindungen (bevorzugt mit einem Molekulargewicht von mehr als 400 g/mol, insbesondere > 500 g/mol) und aus der Klasse der Phosphite geeignet, wobei die phenolische, die schwefelhaltigen und die phosphitische Funktionen nicht in drei verschiedenen Molekülen vorliegen müssen, sondern auch mehr als eine Funktion in einem Molekül vereinigt sein kann.

### Beispiele:

- Phenolische Funktion:
   CAS 6683-19-8 , 2082-79-3, 1709-70-2, 36443-68-2, 1709-70-2, 34137-09-2, 27676-62-6, 40601-76-1, 31851-03-3, 991-84-4
- Schwefelhaltige Funktion:
   CAS 693-36-7, 123-28-4, 16545-54-3, 2500-88-1
- Phosphitische Funktion:
   CAS 31570-04-4, 26741-53-7, 80693-00-1, 140221-14-3, 119345-01-6, 3806-34-6, 80410-33-9, 14650-60-8, 161717-32-4
- Phenolische und schwefelhaltige Funktion:
   CAS 41484-35-9, 90-66-4, 110553-27-0, 96-96-5, 41484
- Phenolische und aminische Funktion:
   CAS 991-84-4, 633843-89-0
- Aminische Funktion:
   CAS 52829-07-9, 411556-26-7, 129757-67-1, 71878-19-8, 65447-77-0

Die Kombination von CAS 6683-19-8 (zum Beispiel Irganox 1010) mit Thiopropionsäureester CAS 693-36-7 (Irganox PS 802) oder 123-28-4 (Irganox PS 800) und mit CAS 31570-04-4 (Irgafos 168) ist besonders bevorzugt. Bevorzugt ist des weiteren eine Kombination, bei welcher der Anteil an sekundärem Antioxidant den des primären übersteigt. Zusätzlich können noch Metalldesaktivatoren zur Komplexierung von Schwermetallspuren, welche die Alterung katalytisch beschleunigen können, zugefügt werden. Beispiele für geeignete Metallfänger sind CAS 32687-78-8, 70331-94-1, 6629-10-3, Ethylendiamintetraessigsäure, N,N'-di-salicyliden-1,2-diaminopropan oder Handelprodukte wie 3-(N-salicylol)-amino-1,2,4-triazol (Palmarole ADK STAB CDA-1), N,N'-bis[3-(3',5'-di-tert-butyl-4'-hydroxyphenyl)propionyl]hydrazid (Palmarole MDA.P.10) oder 2,2'-oxamido-bis-[ethyl-3-(tert-butyl-4-hydroxyphenyl)propionat] (Palmarole MDA.P.11.).

Die Auswahl der genannten Alterungsschutzmittel hat besondere Bedeutung für das erfindungsgemäße Wickelband, da mit phenolischen Antioxidantien allein oder selbst in Kombination mit schwefelhaltigen Costabilisatoren in der Regel keine praxisgerechten Produkte erreicht werden können. Bei der Kalanderverarbeitung, bei der auf den Walzen ein relativ lang andauernder Zutritt von Luftsauerstoff unvermeidlich ist, stellt sich die Mitverwendung von Phosphitstabilisatoren als praktisch unumgänglich für eine ausreichende Wärmealterungsstabilität des Produktes heraus. Selbst bei Extrusionsverarbeitung macht sich der Zusatz von Phosphiten bei der Alterungsprüfung des Produktes noch positiv bemerkbar. Für den Phosphitstabilisator wird eine Menge von mindestens 0,1 phr, vorzugsweise mindestens 0,3 phr bevorzugt. Insbesondere bei der Verwendung von Füllstoffen können sich durch wanderungsfähige Metallverunreinigungen wie Eisen, Mangan, Chrom oder Kupfer Alterungsprobleme ergeben, die nur durch oben genannte Erkenntnisse der richtigen Kombination und Menge an Alterungsschutzmitteln sowie zusätzlich einem Metalldesaktivator vermieden werden.

Das erfindungsgemäße Wickelband ist vorzugsweise pigmentiert, insbesondere schwarz. Die Einfärbung kann in der Folienschicht bzw. einer der Folienschichten, in der Klebstoff- oder einer sonstigen Schicht vorgenommen werden. Die Verwendung von organischen Pigmenten oder Farbstoffen in dem Wickelband ist möglich, bevorzugt ist die Verwendung von Ruß. Der Anteil Ruß liegt vorzugsweise bei mindestens 5 phr. Als Ruß können alle Typen wie zum Beispiel Gasruß, Acetylenruß, Furnaceruß und Flammruß verwendet werden, wobei Flammruß bevorzugt wird, auch wenn zur Einfärbung von Folien Furnaceruße üblich sind. Für eine optimalen Alterung werden Rußtypen mit einem pH-Wert im Bereich von 6 bis 8 bevorzugt.

Das Wickelband wird einseitig mit einer Haftklebstoffbeschichtung versehen. Die Menge der Klebstoffschicht beträgt jeweils 10 bis 40 g/m², vorzugsweise 18 bis 28 g/m² (gemeint ist die Menge nach einer eventuellen notwendigen Entfernung von Wasser oder Lösungsmittel; die Zahlenwerte entsprechen auch in etwa der Dicke in µm). In einem Fall mit Klebstoffbeschichtung beziehen sich die hier gemachten Angaben zur Dicke und zu dickenabhängigen mechanischen Eigenschaften ausschließlich auf die copolymerhaltigen Schicht des Wickelbandes ohne Berücksichtung der Klebstoffschicht oder weiteren Schichten, die in Zusammenhang mit Klebstoffschichten vorteilhaft sind. Die Beschichtung muss nicht vollflächig, sondern kann auch teilflächig ausgeführt sein. Als Beispiel sei ein Wickelband mit je einem haftklebenden Streifen an den Seitenkanten genannt. Diese kann zu etwa rechteckigen Blättern abgeschnitten werden, welche mit dem einem Klebstoffstreifen auf dem Kabelbündel aufgeklebt und dann so weit gewickelt werden, bis der andere Klebstoffstreifen auf der Wickelbandrückseite verklebt werden kann. Eine solche schlauchartige Umhüllung, ähnlich einer Sleeve-Verpackung, weist den Vorteil auf, dass die Biegsamkeit des Kabelbaumes durch die Umwicklung praktisch nicht verringert wird.

Als Klebstoff kommen alle gängigen Typen in Frage, vor allem auf Basis von Kautschuk. Solche Kautschuke können zum Beispiel Homo- oder Copolymere des Isobutylens, des 1-Butens, des Vinylacetats, des Ethylens, von Acrylsäureestern, des Butadiens oder des Isoprens sein. Besonders geeignet sind Rezepturen auf Basis von Polymeren basierend auf Acrylsäureestern, Vinylacetat oder Isopren.

Zur Optimierung der Eigenschaften kann die zum Einsatz kommende Selbstklebemasse mit einem oder mehreren Additiven wie Klebrigmachern (Harzen), Weichmachern, Füllstoffen, Flammschutzmitteln, Pigmenten, UV-Absorbern, Lichtschutz-, Flamm-, Alterungsschutzmitteln, Photoinitiatoren, Vemetzungsmitteln oder Vernetzungspromotoren abgemischt sein. Klebrigmacher sind beispielsweise Kohlenwasserstoffharze (zum Beispiel Polymere auf Basis ungesättigter C5- oder C9-Monomere), Terpenphenolharze, Polyterpenharze auf Basis von Rohstoffen wie zum Beispiel α- oder ß-Pinen, aromatische Harze wie Cumaron-Inden-Harze oder Harze auf Basis Styrol oder α-Methylstyrol, wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit, um nur einige zu nennen, sowie weitere Harze wie beispielsweise in Ullmanns Enzyklopädie der technischen Chemie, Band 12, Seiten 525 bis 555 (4. Aufl.), Weinheim aufgeführt. Bevorzugt werden Harze ohne leicht oxidierbare Doppelbindungen wie Terpenphenolharze, aromatische Harze und besonders bevorzugt Harze, die durch Hydrierung hergestellt sind wie zum Beispiel hydrierte Aromatenharze, hydrierte Polycyclopentadienharze, hydrierte Kolophoniumderivate oder hydrierte Polyterpenharze.

Geeignete Füllstoffe und Pigmente beinhalten beispielsweise Ruß, Titandioxid, Calciumcarbonat, Zinkcarbonat, Zinkoxid, Silicate oder Kieselsäure. Geeignete beimischbare Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel niedermolekulare Nitril- oder Polyisoprenkautschuke), flüssige Polymerisate aus Buten und/oder Isobuten, Acrylsäureester, Polyvinylether, Flüssig- und Weichharze auf Basis der Rohstoffe von Klebharzen, Wollwachs und andere Wachse oder flüssige Silikone, wobei flüchtige Weichmacher vermieden werden sollten. Vernetzungsmittel sind beispielsweise Isocyanate, Phenolharze oder halogenierte Phenolharze, Melamin- und Formaldehydharze. Geeignete Vernetzungspromotoren sind zum Beispiel Maleinimide, Allylester wie Triallylcyanurat, mehrfunktionelle Ester der Acryl- und Methacryläure. Alterungsschutzmittel sind beispielsweise sterisch gehinderte Phenole, die zum Beispiel unter dem Handelsnamen Irganox^{™} bekannt sind.

Als Flammschutzmittel kommen nur halogenfreie Materialien in Frage, beinhaltend beispielsweise Füllstoffe wie Polyphosphate, Carbonate und Hydroxide des Aluminiums oder des Magnesiums, Borate, Stannate, Flammschutzmittel auf Stickstoffbasis wie Melamincyanurat, Dicyandiamid, roter Phosphor oder sterisch gehinderte Amine wie zum Beispiel die Klasse der HA(L)S.

Eine Vernetzung ist vorteilhaft, da die Scherfestigkeit (zum Beispiel ausgedrückt als Holding Power) erhöht wird und sich damit die Neigung zu Deformationen der Rollen bei Lagerung (Teleskopieren oder Bildung von Hohlstellen, auch Gaps genannt) verringert. Auch das Ausquetschen der Haftklebemasse wird verringert. Dies drückt sich in klebfreien Seitenkanten der Rollen und klebfreien Kanten bei dem spiralig um das Kabel geführte Wickelband aus. Die Holding Power liegt vorzugsweise oberhalb von 150 min.

Die Klebkraft auf Stahl sollte im Bereich von 1,5 bis 3 N/cm und auf der Rückseite des Wickelbandes im Bereich von 1,0 bis 2,5 N/cm liegen.

Zusammenfassend weist die bevorzugte Ausführungsform einseitig eine lösungsmittelfreie Selbstklebemasse auf, welche durch Coextrusion, Schmelz- oder Dispersionsbeschichtung erhalten wurde. Dispersionsklebstoffe sind bevorzugt insbesondere solche auf Polyacrylat-Basis.

Vorteilhaft ist die Verwendung einer Primerschicht zwischen Wickelband und Klebmasse zur Verbesserung der Haftung der Klebmasse auf dem Wickelband und somit der Vermeidung der Übertragung von Klebstoff auf die Folienrückseite während des Abwickelns der Rollen.

Als Primer sind die bekannten Dispersion- und Lösungsmittelsysteme verwendbar, zum Beispiel auf Basis von isopren- oder butadienhaltigen Kautschuken und/oder Cyclokautschuken. Isocyanate oder Epoxyharze als Additive verbessern die Haftung und erhöhen zum Teil auch die Scherfestigkeit des Haftklebstoffes. Physikalische Oberflächenbehandlungen wie Beflammung, Corona oder Plasma oder Coextrusionsschichten sind ebenfalls geeignet, die Haftung zu verbessern. Besonders bevorzugt ist die Nutzung vorgenannter Verfahren bei Verwendung lösungsmittelfreier Klebstoffschichten, insbesondere solche auf Acrylatbasis.

Eine Beschichtung der Rückseite kann durch bekannte Releasemittel (gegebenenfalls mit weiteren Polymeren abgemischt) erfolgen. Beispiele sind Stearyl-Verbindungen (zum Beispiel Polyvinylstearylcarbamat, Stearylverbindungen von Übergangsmetallen wie Cr oder Zr, Harnstoffe aus Polyethylenimin und Stearylisocyanat, Polysiloxane (zum Beispiel als Copolymer mit Polyurethanen oder als Propfcopolymer auf Polyolefin), thermoplastische Fluorpolymere. Der Begriff Stearyl steht als Synonym für alle geraden oder verzweigten Alkyle oder Alkenyle mit einer C-Zahl von mindestens 10, wie zum Beispiel Octadecyl.

Beschreibungen der üblichen Klebmassen sowie Rückseitenbeschichtungen und Primern finden sich zum Beispiel in "Handbook of Pressure Sensitive Adhesive Technology", D. Satas, (3. Auflage). Die genannten Rückseiten-Primer- und Klebebeschichtungen sind in einer Ausführungsform durch Coextrusion möglich.

Die Ausführung der Folienrückseite kann aber auch zur Erhöhung der Haftung der Klebmasse auf der Wickelbandrückseite (zum Beispiel zur Steuerung der Abrollkraft) dienen. Bei polaren Klebstoffen wie zum Beispiel auf Basis von Acrylatpolymeren ist die Rückseitenhaftung auf einer Folie auf Basis von olefinhaltigen Polymeren oft nicht ausreichend. Zur Erhöhung der Abrollkraft wird eine Ausführungsform beansprucht, bei der polare Rückseitenoberflächen durch Coronabehandlung, Flammvorbehandlung oder Beschichtung/Coextrusion mit polaren Rohstoffen erzielt werden.

Alternativ wird ein Wickelband beansprucht, bei welchem die Stangenware vor dem Schneiden getempert (in der Wärme gelagert) wurde. Beide Verfahren können auch in Kombination angewandt werden. Das erfindungsgemäße Wickelband weist bevorzugt eine Abrollkraft von 1,2 bis 6,0 N/cm, besonders bevorzugt von 1,6 bis 4,0 N/cm und insbesondere bevorzugt von 1,8 bis 2,5 N/cm bei 300 mm/min Abrollgeschwindigkeit auf. Das Tempern ist bei PVC-Wickelbändern bekannt, jedoch aus einem anderen Grund. Weich-PVC-Folien besitzen im Gegensatz zu teilkristallinen Polyolefincopolymerfolien einen breiten Erweichungsbereich und, da die Klebmasse durch den ausgewanderten Weichmacher wenig scherfest ist, neigen PVC-Wickelbänder zum Teleskopieren. Diese unvorteilhafte Rollendeformation, bei welcher der Kern aus den Rollen seitlich herausgedrückt wird, kann verhindert werden, wenn das Material vor dem Schneiden längere Zeit gelagert wird oder kurze Zeit einer Temperung (befristete Lagerung in der Wärme) unterworfen wird. Bei dem erfindungsgemäßen Verfahren handelt es sich jedoch um einer Temperung zur Erhöhung der Abrollkraft von Material mit olefinhaltiger Folienrückseite und polarer Klebmasse, wie Polyacrylat oder EVA, da diese Klebmasse auf olefinhaltigem Material, im Vergleich zu PVC, eine extrem geringe Rückseitenhaftung aufweist. Eine Erhöhung der Abrollkraft durch Temperung oder physikalische Oberflächenbehandlung ist bei Weich-PVC-Wickelbändern nicht notwendig, da die üblicherweise eingesetzten Klebmassen eine hinreichend hohe Haftung auf der polaren PVC-Oberfläche besitzen. Bei Polyolefinwickelbändern ist die Bedeutung der Rückseitenhaftung besonders ausgeprägt, da aufgrund der höheren Kraft bei 1 % Dehnung (bedingt das Fehlen des Weichmachers) im Vergleich zu PVG-Folien eine deutlich höhere Rückseitenhaftung beziehungsweise Abrollkraft notwendig ist, um eine hinreichende Dehnung beim Abrollen für die Applikation bereitzustellen. Die bevorzugte Ausführungsform des Wickelbandes wird daher durch Temperung oder physikalische Oberflächenbehandlung hergestellt, um eine herausragende Abrollkraft und Dehnung während der Abrollung zu erreichen, wobei die Abrollkraft bei 300 mm/min vorzugsweise um mindesten 50 % höher liegt als ohne eine solche Maßnahme.

Das erfindungsgemäße Wickelband wird für den Fall einer Klebstoffbeschichtung vorzugsweise vorher mindestens 3 Tage, besonders bevorzugt mindestens 7 Tage vor der Beschichtung gelagert, um eine Nachkristallisation zu erreichen, damit die Rollen keine Neigung zum Teleskopieren erhalten (wahrscheinlich weil die Folie beim Kristallisieren schrumpft). Vorzugsweise wird die Folie an der Beschichtungsanlage über geheizte Walzen zur Egalisierung (Verbesserung der Planlage) geführt, was für PVC-Wickelbänder nicht üblich ist.

Folien aus polyolefinhaligem Material lassen sich üblicherweise nicht von Hand ein- oder abreißen. Sie lassen sich als teilkristalline Werkstoffe leicht verstrecken und weisen daher eine hohe Bruchdehnung auf, in der Regel liegt diese erheblich über 500 %.

Beim Versuch, solche Folien zu reißen, tritt anstelle eines sauberen Risses eine Verdehnung der Folie ein. Selbst hohe Kräfte können nicht unbedingt die typisch hohen Bruchkräfte überwinden. Selbst wenn das Einreißen gelingt, wird kein gut aussehender und verklebbarer Abriss erzeugt, da an beiden Enden der getrennten Folie ein dünnes schmales Schwänzchen entsteht. Dieses Problem lässt sich auch durch Additivierung nicht beheben, auch wenn Füllstoffe in hohen Mengen die Bruchdehnung reduzieren. Verstreckt man Polyolefinfolien biaxial, wird die Bruchdehnung um mehr als 50 % reduziert, was die Reißbarkeit begünstigt. Der Versuch, dieses Verfahren auf weiche Wickelbänder zu übertragen, scheitert jedoch, da der 1 %-Kraftwert erheblich zunimmt und die Kraft-Dehnungs-Kurve erheblich steiler wird. Dies hat zur Folge, dass sich die Flexibilität und Anschmiegsamkeit des Wickelbandes drastisch verschlechtert. Das erfindungsgemäße Wickelband weist jedoch ein sehr gutes Verhalten beim Abreißen in Längsrichtung oder Einreißen in Querrichtung auf. Zusätzlich kann das Reißverhalten durch das Schneidverfahren beim Konfektionieren der Rollen optimiert werden. Bei Herstellung der Wickelbandrollen können raue Schnittkanten erzeugt werden, die bei mikroskopischer Betrachtung Risse in der Folie ausbilden, die dann offenbar ein Weiterreißen begünstigen. Dies ist insbesondere durch die Anwendung eines Quetschschnitts mit stumpfen oder definiert gezackten rotierenden Messern auf Ballenware (Jumbos, Rollen in großer Länge) oder durch einen Abstechschnitt mit feststehenden Klingen oder rotierenden Messern von Stangenware (Rollen in Produktionsbreite und verkaufsüblicher Länge) möglich. Die Bruchdehnung kann durch einen geeigneten Schliff der Klingen und Messer eingestellt werden. Bevorzugt ist die Ausführung der Herstellung von Stangenware mit Abstechschnitt mit feststehenden Klingen. Durch starkes Abkühlen der Stangen vor dem Schneiden kann die Rissbildung beim Schneidprozess noch verbessert werden. In der bevorzugten Ausführungsform ist die Bruchdehnung des speziell geschnittenen Wickelbandes um mindestens 30 % niedriger als beim Schnitt mit scharfen Klingen. In der besonders bevorzugten Ausführungsform des Wickelbandes, deren Seitenkanten beim Schneiden definiert beschädigt werden, liegt die Bruchdehnung zwischen 200 und 400 %.

Die Stangenware kann zur Erhöhung der Abrollkraft zuvor einer Wärmelagerung unterzogen werden. Das Schneiden von konventionellen Wickelbändern mit Gewebe-, Vlies- und Folienträger (zum Beispiel PVC) erfolgt durch Scherenschnitt (zwischen zwei rotierenden Messern), Abstechschnitt (feststehende oder rotierender Messer werden in eine rotierende Stange des Produktes gedrückt), Klingenschnitt (die Bahn wird bei Durchlauf durch scharfe Klingen geteilt) oder Quetschschnitt (zwischen einem rotierenden Messer und einer Walze).

Das Schneiden bei Wickelbändern aus PVC hat nur zum Ziel, aus Jumbos oder Stangen verkaufsfertige Rollen zu produzieren, jedoch nicht raue Schnittkanten zur leichteren Handeinreißbarkeit zu erzeugen. Bei Wickelbändern aus PVC ist der Abstechschnitt durchaus üblich, da das Verfahren bei weichen Folien wirtschaftlich ist. Die Handeinreißbarkeit ist aber bei PVC schon vom Material sehr gut, da PVC im Gegensatz zu olefinhaltigen Polymeren amorph ist und daher beim Reißen nicht verstreckt, sondern nur etwas gedehnt wird. Damit die PVC-Folien nicht zu leicht reißen, muss auf hinreichende Gelierung bei der Folienherstellung geachtet werden, was einer optimalen Produktionsgeschwindigkeit entgegensteht. Vielfach wird deshalb anstelle von Standard-PVC mit einem K-Wert von 63 bis 65 Material mit einem höheren Molekulargewicht eingesetzt, was K-Werten von 70 und mehr entspricht. Der Abstechschnitt hat also bei den erfindungsgemäßen Wickelbändern aus Copolymer einen anderen Grund als bei solchen aus PVC.

Sodann umfasst der Erfindungsgedanke auch ein leicht reißbares halogenfreies Wickelband bestehend aus einer Folie aus einem Copolymer aus
(a) α-Olefin der Formel R-CH=CH₂, wobei R Wasserstoff oder ein Alkylradikal mit 1 bis 10 Kohlenstoffatomen ist, und
(b) eine α,ß-ethylenisch ungesättigte Carbonsäure aus 3 bis 8 Kohlenstoffatomen sowie
(c) optional ein weiteres monoethylenisch ungesättigtes Monomer,
wobei die Carbonsäuregruppen des Copolymers zu 10 bis 90 % durch Neutralisation mit Metallverbindungen ionisiert sind,
wobei der Anteil an Copolymer in der Folie mindestens 50 Gew.-% beträgt und wobei die Folienschicht des Wickelbandes vernetzt ist, vorzugsweise durch ionisierende Strahlung oder Modifizierung eines Polymers mit Silangruppen und wobei die Folienschicht durch Blasextrusion hergestellt ist.

Bei Verwendung des Wickelbandes wird dies vorzugsweise am Wickelende mit einem Klebeband fixiert.

Das erfindungsgemäße Wickelband ist ausgezeichnet zum Umwickeln von langgestrecktem Gut wie Feldspulen oder Kabelsätzen in Fahrzeugen geeignet. Das erfindungsgemäße Wickelband ist ebenfalls für andere Anwendungen geeignet wie zum Beispiel für Lüftungsrohre im Klimabau, da die hohe Flexibilität eine gute Anschmiegsamkeit an Nieten, Sicken und Falzen sichert. Den heutigen arbeitshygienischen und ökologischen Anforderungen wird Rechnung getragen, indem auf den Einsatz halogenhaltiger Rohstoffen verzichtet wird, dies gilt auch für flüchtige Weichmacher, es sei denn die Mengen sind so gering, dass der Fogging-Wert in der Regel 90 % nicht unterschreitet. Die Halogenfreiheit ist für die thermische Verwertung von Abfällen, die solche Wickelbänder enthalten, von außerordentlicher Bedeutung (zum Beispiel Müllverbrennung der Kunststofffraktion vom Fahrzeugrecycling). Das erfindungsgemäße Produkt ist halogenfrei in dem Sinne, dass der Halogenhalt der Rohstoffe so niedrig ist, dass er für die Flammwidrigkeit keine Rolle spielt. Halogene in Spurenmengen, wie sie durch Verunreinigungen oder als Rückstände von Katalysatoren (zum Beispiel aus der Polymerisation der eingesetzten Polymere) auftreten könnten, bleiben unberücksichtigt. Der Verzicht auf Halogene zieht die Eigenschaft der leichten Brennbarkeit nach sich, was den Sicherheitserfordernissen in elektrischen Anwendungen wie Haushaltsgeräten oder Fahrzeugen nicht entspricht. Das Problem mangelnder Flexibilität bei der Verwendung üblicher PVC-Ersatzmaterialien wie Polypropylen, Polyester, Polystyrol, Polyamid oder Polyimid für das Wickelband wird in der zugrundeliegenden Erfindung nicht durch flüchtige Weichmacher gelöst, sondern durch den Einsatz eines weichen speziellen Copolymers, welches trotz seiner Weichheit und Flexibilität eine gute Reißbarkeit ermöglichst, insbesondere bei Anwendung der geschilderten optimalen Prozessbedingungen. Die Flexibilität ist von herausragender Bedeutung, da bei Anwendung auf Drähten und Kabeln nicht nur spiralig gewickelt sondern an Verzweigungsstellen, Steckern oder Befestigungsclipsen auch faltenfrei kurvenflexibel gewickelt werden muss. Darüber hinaus ist erwünscht, dass das Wickelband den Kabelstrang elastisch zusammenzieht. Dieses Verhalten ist auch zur Abdichtung der Lüftungsrohre notwendig. Diese mechanischen Eigenschaften können von einem flexiblen Wickelband basierend auf dem erfindungsgemäßen Copolymer erreicht werden

### Prüfmethoden

Die Messungen werden bei einem Prüfklima von 23 ± 1 °C und 50 ± 5 % rel. Luftfeuchte durchgeführt.

Die Dichte der Polymeren wird nach ISO 1183, der Biegemodul nach ISO 178 ermittelt und in g/cm³ beziehungsweise MPa ausgedrückt. Der Biegemodul nach ASTM D790 beruht auf anderen Abmessungen der Probekörper, ist aber im Ergebnis als Zahl vergleichbar. Der Schmelzindex wird nach ISO 1133 geprüft und in g/10 min ausgedrückt. Die Prüfbedingungen sind wie marktüblich 230 °C und 2,16 kg für Polymere mit kristallinem Polypropylen und 190 °C und 2,16 kg für Polymere mit kristallinem Polyethylen. Der Kristallitschmelzpunkt (T_{cr}) wird mit DSC nach MTM 15902 (Basell-Methode) beziehungsweise ISO 3146 ermittelt.

Das Zugdehnungsverhalten des Wickelbandes wird an Prüflingen vom Typ 2 (rechteckige 150 mm lange und nach Möglichkeit 15 mm breite Prüfstreifen) nach DIN EN ISO 527-3/2/300 mit einer Prüfgeschwindigkeit von 300 mm/min, einer Einspannlänge von 100 mm und einer Vorkraft von 0,3 N/cm ermittelt. Im Fall von Mustern mit rauen Schnittkanten sind die Kanten mit einer scharfen Klinge vor dem Zugversuch zu besäumen. Für die Bestimmung der Kraft oder Spannung bei 1 %-Dehnung wird hiervon abweichend mit einer Prüfgeschwindigkeit von 10 mm/min und einer Vorkraftseinstellung von 0,5 N/cm an einer Zugprüfmaschine Modell Z 010 (Hersteller Zwick) gemessen. Die Prüfmaschine ist angegeben, weil der 1 %-Wert etwas von dem Auswertungsprogramm beeinflusst werden kann. Das Zugdehnungsverhalten wird, wenn nicht anders angegeben, in Maschinenrichtung (MD, Laufrichtung) geprüft. Die Kraft wird in N/Streifenbreite und die Spannung in N/Streifenquerschnitt ausgedrückt, die Bruchdehnung in %. Die Prüfergebnisse, insbesondere die Bruchdehnung (Reißdehnung), sind durch eine hinreichende Zahl von Messungen statistisch abzusichern.

Die Klebkräfte werden bei einem Abzugswinkel von 180° nach AFERA 4001 an (nach Möglichkeit) 15 mm breiten Teststreifen bestimmt. Hierbei werden Stahlplatten nach AFERA-Norm als Prüfuntergrund verwendet soweit kein anderer Haftgrund genannt ist.

Die Dicke der Folienschicht des Wickelbandes wird nach DIN 53370 bestimmt (die Haftklebstoffschicht wird nicht berücksichtigt).

Die Holding Power wird nach der PSTC 107 (10/2001) bestimmt, wobei das Gewicht 20 N beträgt und die Maße der Verklebungsfläche 20 mm in der Höhe und 13 mm in der Breite beträgt.

Die Abrollkraft wird bei 300 mm/min nach DIN EN 1944 gemessen.

Die Handeinreißbarkeit lässt sich schwer in Zahlen ausdrücken, auch wenn Bruchkraft, Bruchdehnung und Schlagzugzähigkeit (alles längs gemessen) von wesentlichem Einfluss sind. Die Folie wird sowohl quer zwischen zwei Paaren aus Daumen und Zeigefingerspitzen durchgerissen als auch nach Beendigung eines Wickelvorgangs in Längsrichtung ruckartig abgerissen.

### Bewertung:

| | |
|---|---|
| +++ = | sehr leicht, |
| ++ = | gut, |
| + = | noch verarbeitbar, |
| - = | schwer verarbeitbar, |
| -- = | nur mit hohem Kraftaufwand abreißbar, die Enden sind unsauber, |
| --- = | nicht verarbeitbar |

Die Prüfung der Reißfestigkeit nach Elmendorf erfolgt nach ASTM D1922. Als Kriterium eines sauber quer verlaufenden Risses wird das Verhältnis der Reißfestigkeit in Querrichtung zu der in Längsrichtung herangezogen.

Die Wärmestabilität wird in Anlehnung an ISO/DIN 6722 bestimmt. Der Ofen wird nach ASTM D 2436-1985 mit 175 Luftwechseln pro Stunde betrieben. Die Prüfzeit beträgt 3000 Stunden. Als Prüftemperatur wird 105 °C (ähnlich Klasse B jedoch abweichend 105 °C statt 100 °C) gewählt.

Bei der Verträglichkeitsprüfung wird die Wärmelagerung auf handelsüblich Leitern (Kabeln) mit Polyolefinisolierung (Polypropylen oder strahlenvemetztes Polyethylen) für Kraftfahrzeuge durchgeführt. Hierfür werden Probekörper aus Leitern von 3 bis 6 mm² Querschnitt, 350 mm Länge und 10 mm Gesamtdurchmesser durch Umwicklung mit Wickelband mit 50 %iger Überlappung hergestellt. Nach der 3000 Stunden-Alterung der Probekörper im Umluftofen (Bedingungen wie bei der Prüfung der Wärmestabilität) werden die Proben bei 23 °C konditioniert und nach ISO/DIN 6722 von Hand um einen Dorn gewickelt. Der Wickeldorn einen Durchmesser von 5 mm, das Gewicht hat eine Masse von 5 kg und die Wickelgeschwindigkeit beträgt 1 Umdrehung pro Sekunde. Die Muster werden anschließend visuell auf Fehler in dem Wickelband und in der Drahtisolierung unter der Wickelband untersucht. Der Test ist nicht bestanden, wenn Risse in der Drahtisolierung erkennbar sind, insbesondere wenn diese schon vor dem Biegen auf dem Wickeldorn erkennbar sind. Wenn das Wickelband Risse aufweist oder im Ofen geschmolzen ist, gilt der Test ebenfalls als nicht bestanden. Bei der 125°C-Prüfung wurden teilweise auch Muster zu anderen Zeitpunkten geprüft. Als Prüfzeit gelten 3000 Stunden soweit nicht im Einzelfall ausdrücklich anders beschrieben.

Beim Kältetest wird der oben beschriebene Probekörper in Anlehnung an ISO/DIN 6722 4 Stunden auf -40 °C abgekühlt und die Probe von Hand auf einen Dorn von 5 mm Durchmesser gewickelt. Die Muster werden visuell auf Fehler (Risse) im Klebeband geprüft.

Die Durchschlagspannung wird nach ASTM D 1000 gemessen. Als Zahl wird der höchste Wert genommen, dem das Muster bei dieser Spannung eine Minute standhält. Diese Zahl wird auf eine Probendicke von 100 µm umgerechnet.

### Beispiel:

Eine Probe von 200 µm Dicke hält nach einer Minute eine maximale Spannung von 6 kV stand, die berechnete Durchschlagspannung beträgt 3 kV/100 µm.

Der Fogging-Wert wird nach DIN 75201 A ermittelt.

Das Brandverhalten wird nach einer Methode eines Autoherstellers geprüft. Hierzu werden die Prüfdrähte mit ca. 0,5 mm Leitungsquerschnitt und Polyolefinisolierung durch Umwicklung mit dem zu prüfenden Wickelband zu einem 30 cm langen Kabelbaum von 10 mm Durchmesser verarbeitet. Die Überlappung des Wickelbandes beträgt 50 %. Der Kabelbaum wird waagerecht fixiert und mit einer 130 mm langen Gasflamme mit einer 35 mm langem inneren Flamme 30 Sekunden zur Entzündung erhitzt. Dabei wird die Spitze der desoxidierenen Flamme von unten auf die Mitte der Probe gerichtet. Die Prüfung ist bestanden, wenn der Kabelbaum in dem zugluftfreien Raum von selbst verlischt.

Der Weißbruch wird visuell an einer 100 mm langen Probe bestimmt, welche auf einer Zugprüfmaschine mit 300 mm/min auf 200 % der Ursprungslänge gedehnt wurde.

Folgende Beispiele sollen die Erfindung erläutern, ohne deren Umfang zu beschränken.

### Inhalt:

- Beschreibung der Beispiele
- Tabellarische Zusammenstellung der Ergebnisse der Beispiele
- Beschreibung der Vergleichsbeispiele
- Tabellarische Zusammenstellung der Ergebnisse der Vergleichsbeispiele

### Beispiel 1 (nicht erfindungsgemäß)

Zur Herstellung des Trägerfilmes wurde ein Ethylencopolymer mit Na-lonen (Surlin 1601-2, DuPont) als Flachfolie (= Cast-Verfahren) mit einer Düsentemperatur von 200 °C extrudiert.

Die erhaltene Folie wird einseitig coronabehandelt und anschließend auf dieser Seite die Klebmasse Rikidyne BDF 505 (unter Zugabe von 1 Gew.-% Desmodur Z 4470 MPA/X auf 100 Gewichtsteile Klebemasse auf Trockengehalt berechnet) mit 23 g/m² aufgetragen. Der Haftklebstoff wird im Wärmekanal getrocknet und dabei chemisch vernetzt und anschließend am Ende des Trockners zu Stangen mit 25 m Lauflänge gewickelt. Das Schneiden erfolgt durch Abstechen der erhaltenen Stangen mittels rotierender Messer (round blade) in Rollen zu 15 mm Breite.

### Eigenschaften des Wickelbandes:

Holding Power > 2000 min (dann Messung abgebrochen).

Das Produkt lässt sich leicht von Hand ein- und abreißen, der Riss erfolgt in keiner Vorzugsrichtung. Nach einer Lagerung von 7 Tagen bei 120 °C ist die Probe weder versprödet noch geschmolzen.

### Beispiel 2

Auf einer Blasfolienanlage wird eine Folie hergestellt. Die Außenschichten bestehen aus

| | |
|---|---|
| 74 Gew.-% | LDPE (LD 166 BA, Exxonmobil), |
| 20 Gew.-% | HDPE (HMA 035, Exxonmobil), |
| 1 Gew.-% | Antioxidantgemisch (bestehend aus 1/4 Irganox 1010, 1/2 Irganox PS 802, |
| 1/4 | Irgafos 168) und |
| 5 Gew.-% | Rußbatch (Plasblack PE 1851, Cabot) |

und die Mittelschicht aus

| | |
|---|---|
| 99 Gew.-% | Ethylencopolymer mit Na-Ionen (Surlin 1601-2, DuPont) und |
| 1 Gew.-% | oben genannten Antioxidantgemischs. |

### Verfahrensbedingungen:

Extrudertemperatur 175 °C
Düsentemperatur 180 °C
Aufblasverhältnis 2,6
Längsstreckverhältnis 5,8
Höhe der Frostlinie 60 cm
Dicke der Außenschichten jeweils 40 µm
Dicke der Mittelschicht 35 µm

Die so hergestellte Trägerfolie wird einer einseitigen Flammvorbehandlung unterzogen und mit Acronal DS 3458 (Acrylatschmelzhaftkleber) mittels eines Walzenauftragswerks bei 50 m/min beschichtet. Die Temperaturbelastung des Trägers wird durch eine gekühlte Gegendruckwalze reduziert. Der Masseauftrag beträgt ca. 35 g/m². Eine geeignete Vernetzung des Haftklebstoffs wird in-line vor der Aufwicklung durch Bestrahlung mit einer UV-Anlage erreicht, die mit 6 Mitteldruck-Hg-Lampen ä 120 W/cm ausgestattet ist. Die bestrahlte Bahn wird zu Stangen mit 20 m Lauflänge auf 1 1/4-Zoll-Kern (31 mm) gewickelt. Die Stangen werden zur Erhöhung der Abrollkraft 5 Stunden in einem Ofen bei 60 °C getempert. Das Schneiden erfolgt durch Abstechen der Stangen mittels feststehender Klinge (straight knife) in 50 mm breite Rollen.

Dieses Wickelband zeichnet sich durch eine relativ geringe Querreißfestigkeit nach Elmendorf aus (14 N/mm, in Längsrichtung 30 N/mm) aus und lässt sich trotz der großen Breite mit sauberen Kanten abreißen.

### Beispiel 3

Auf einer Blasfolienanlage wird eine Folie hergestellt. Die eine Schicht ist 40 µm stark und besteht aus einem Compound

| | |
|---|---|
| 78,7 Gew.-% | eines Ethylencopolymers mit Zn-lonen [Novex M21G764, BP], |
| 0,3 Gew.-% | Irganox 1010, |
| 1 Gew.-% | Irganox PS 802, |
| 20 Gew.-% | Melamincyanurat [Melapur NC25, Nordmann-Rassmann]), |

die andere ist 60 µm stark und besteht zu

| | |
|---|---|
| 85 Gew.-% | aus EVA (LD 360, Exxonmobil), |
| 5 Gew.-% | Rußbatch (Plasblack PE 1851, Cabot), |
| 5 Gew.-% | Mattierungsmittelbatch (LCC 70, Schulman) und |
| 5 Gew.-% | Antioxidantmasterbatch (TS 801 LD, Polyplast Müller). |

Nach einer Coronabehandlung auf der nicht eingefärbten Seite wird ein wässriger Acrylathaftklebstoff (90 Gew.-Teile in Lieferform Primal PS 83 D und 10 Gew.-Teile Melamincyanurat) mittels eines Rakels mit einem Auftragsgewicht von 24 g/m² aufgetragen. Die Trocknung der Klebstoffschicht erfolgt im Trockenkanal bei 70 °C, das fertige Wickelband wird zu Stangen mit 20 m Lauflänge auf 1-Zoll-Kern (25 mm) gewickelt. Das Schneiden erfolgt durch Abstechen der Stangen mittels feststehender Klinge mit nicht sehr spitzem Winkel (straight knife) in 19 mm breite Rollen.

Diese Wickelfolie zeigt eine leicht matte Oberfläche.

### Beispiel 4

Im Blasverfahren wird eine Folie aus 65 Gew.-% eines Ethylencopolymers mit Li-lonen (Surlin 7930, DuPont), 30 Gew.-% eines Evas (LD261, Exxonmobil) und 5 Gew. % eines Antioxidantmasterbatches (PPM 1553, Polyplast Müller) hergestellt. Die coronabehandelte Seite wird mit einer Haftvermittlerschicht aus Naturkautschuk, Cyclokautschuk und 4,4'-Diisocyanato-diphenylmethan (Lösungsmittel Toluol) von 0,6 g/m² beschichtet und getrocknet. Die Klebmassenbeschichtung wird direkt auf die Haftvermittlerschicht mittels Kommarakel mit einem Auftragsgewicht von 18 g/m² (bezogen auf Trockensubstanz) aufgetragen. Die Klebmasse besteht aus einer Lösung einer Naturkautschukklebemasse in n-Hexan mit einem Feststoffgehalt von 30 Gewichtsprozent. Diese besteht aus

| | |
|---|---|
| 50 Teilen | Naturkautschuk, |
| 10 Teilen | Zinkoxid, |
| 3 Teilen | Kolophoniumharz, |
| 6 Teilen | Alkylphenolharz, |
| 17 Teilen | Terpenphenolharz, |
| 12 Teilen | Poly-β-Pinenharz, |
| 1 Teil | Antioxidant Irganox 1076 und |
| 2 Teilen | mineralischem Öl. |

Die Trocknung des Nachstriches erfolgt im Trockenkanal bei 100 °C. Die Folie wird unmittelbar dahinter in einem Verbundschneidautomaten mit einem Messerbalken mit scharfen Klingen in 19 mm Abstand zu Rollen auf Standardklebebandkernen (3 Zoll) geschnitten.

### Beispiel 5

Auf einer Blasfolienanlage wird eine Folie mit Klebstoffschicht hergestellt, weist folgenden Rezepturaufbau auf:
Schicht 1:

| | |
|---|---|
| 60 µm: | |
| 70 Gew.-% | LDPE (LD 166 BA, Exxonmobil), |
| 20 Gew.-% | HDPE (HMA 035, Exxonmobil), |
| 5 Gew.-% | eines Antioxidantmasterbatches (PPM 1553, Polyplast Müller) und |
| 5 Gew.-% | Rußbatch (Plasblack PE 1851, Cabot) |

Schicht 2:

| | |
|---|---|
| 60 µm: | |
| 95 Gew.-% | Ethylencopolymer mit Na-Ionen (Surlin 1601-2, DuPont) und |
| 5 Gew.-% | eines Antioxidantmasterbatches (PPM 1553, Polyplast Müller) |

Schicht 3:

| | |
|---|---|
| 15 µm: | |
| 100 phr | Escorene UL 02133 |

Schicht 4
20 µm: Levapren 450

Die klebende Folie wird auf der Rückseite mit geringer Leistung in-line coronabehandelt und zu Stangen von 20 m Lauflänge gewickelt, welche eine Woche bei 40 °C getempert werden. Das Schneiden erfolgt durch Abstechen der Stangen mittels feststehender Klinge (straight knife). Durch die Temperung steigt die Abrollkraft so stark an, dass sich die Wickelfolie unter leichter Spannung applizieren lässt. Dies Ausführungsform ist lösungsmittelfrei und einfach herstellbar, da keine Beschichtung erforderlich ist.

Das Verhältnis der Reißfestigkeiten längs zu quer beträgt 7,2.

### Eigenschaften der Beispiele

| | ***Beispiel 1* *** | ***Beispiel 2*** | ***Beispiel 3*** | ***Beispiel 4*** | ***Beispiel 5*** |
|---|---|---|---|---|---|
| Foliendicke [mm] | 0,1 | 0,115 | 0,1 | 0,12 | 0,135 |
| Klebkraft Stahl [N/cm] | 2,4 | 3,0 | 2,9 | 3,0 | 1,9 |
| Klebkraft auf eigener Rückseite [N/cm] | 1,9 | 2,2 | 1,9 | 18 | 1,7 |
| Abrollkraft [N/cm] | 2,2 | 2,4 | 2,2 | 2,7 | 2,6 |
| Reißkraft* [N/cm] | 10 | 22 | 7 | 26 | 33 |
| Reißdehnung* [%] | 350 | 320 | 190 | 290 | 330 |
| Kraft bei 1 % Dehnung [N/cm] | 1,0 | 2,5 | 1,9 | 0,5 | 1,7 |
| Kraft bei 100 % Dehnung [N/cm) | 7 | 15 | 4 | 19 | 21 |
| Reißdehnung* nach 3000h@105°C >100% | ja | ja | ja | ja | ja |
| Kompatibilität mit PE- und PP-Kabeln 3000h@105 °C | keine Versprödung | keine Versprödung | keine Versprödung | keine Versprödung | keine Versprödung |
| Handeinreißbarkeit | +++ | ++ | ++ | + | +++ |
| Durchschlagspannung [kV/100µm] | 10 | 11 | 5 | 9 | 12 |
| Fogging-Wert | 98 | 96 | 99 | 55 | 93 |
| Halogenfreiheit | ja | ja | ja | ja | ja |
| Brandtest auf PE und PP-Kabeln | OK | OK | OK | OK | OK |
| Kältetest - 40 °C | OK | OK | OK | OK | OK |
| Weißbruch | nein | nein | ja | nein | nein |

| | | | | | |
|---|---|---|---|---|---|
| * nicht erfindungsgemäß * an mit Klingen geschnittenen Mustern | | | | | |

### Vergleichsbeispiel 1

Zur Beschichtung wird eine konventionelle Folie für Isolierband von Singapore Plastic Products Pte. unter der Bezeichnung F2104S eingesetzt. Die Folie enthält nach Herstellerangaben

| | |
|---|---|
| ca. 100 phr | Suspensions-PVC mit dem K-Wert 63 bis 65, |
| 43 phr | DOP (Di-2-ethylhexylphthalat), |
| 5 phr | dreibasisches Bleisulfat (TLB, Stabilisator), |
| 25 phr | gemahlene Kreide (Bukit Batu Murah Malaysia mit Fettsäure-Coating), |
| 1 phr | Furnaceruß und |
| 0,3 phr | Stearinsäure (Gleitmittel). |

phr entspricht parts per hundred resin.

Die Nenndicke beträgt 100 µm und die Oberfläche ist glatt aber matt.

Auf der einen Seite wird der Primer Y01 von Four Pillars Enterprise/Taiwan aufgetragen (analytisch acrylatmodifizierter SBR-Kautschuk in Toluol) und darauf 23 g/m² des Klebstoffs IV9 von Four Pillars EnterpriselTaiwan (analytisch feststellbare Hauptkomponente: SBR und Naturkautschuk, Terpenharz und Alkylphenolharz in Toluol). Die Folie wird unmittelbar nach dem Trockner mit einem Messerbalken mit scharfen Klingen in 25 mm Abstand in einem Verbundschneidautomaten zu Rollen geschnitten.

Die Reißdehnung nach 3000 h bei 105 °C ist nicht messbar, da das Muster durch Weichmacherverdampfung in kleine Stücke zerfallen ist. Nach 3000 h bei 85 °C beträgt die Reißdehnung 150 %

### Vergleichsbeispiel 2

Das Beispiel A der WO 97/05206 A1 wird nachgearbeitet.

Die Herstellung des Compounds wird nicht beschrieben. Die Komponenten werden daher auf einem Doppelschneckenlaborextruder von 50 cm Länge und einem UD-Verhältnis von 1:10 gemischt:

| | |
|---|---|
| 9,59 phr | Evatane 2805, |
| 8,3 phr | Attane SL 4100, 82,28 phr Evatane 1005 VN4, |
| 74,3 phr | Martinal 99200-08, |
| 1,27 phr | Irganox 1010, |
| 0,71 phr | AMEO T, 3,75 Masterbatch schwarz (hergestellt aus je 50 Gew.-% Polyethylen mit MFI = 50 und Furnace Seast 3 H), |
| 0,6 phr | Stearinsäure, |
| 0,60 phr | Luwax AL 3. |

Der Compound wird granuliert, getrocknet und auf einer Laboranlage zu einer Schlauchfolie verblasen und beidseitig geschlitzt. Es wird versucht, die Folie nach Coronavorbehandlung mit Klebstoff analog Beispiel 1 zu beschichten, sie weist jedoch zu starken Schrumpf in Quer- und Längsrichtung auf, die Rollen sind nach 4 Wochen wegen zu hoher Abrollkraft kaum noch abwickelbar.

Daher folgt ein Versuch der Beschichtung mit einem unpolaren Kautschukleber wie in Beispiel 6, welcher aber an der Lösungsmittelempfindlichkeit der Folie scheitert. Da die angegebene Schrift eine Klebstoffbeschichtung nicht beschreibt, wohl aber anzustrebende klebtechnische Eigenschaften, wird die Folie im Scherenschnitt zwischen einem Satz aus Paaren von je zwei rotierenden Messern zu 25 mm breiten Streifen zerschnitten und gewickelt.

Das selbstklebende Wickelband zeichnet sich durch eine gute Flexibilität und Flammwidrigkeit aus. Die Handeinreißbarkeit ist jedoch nicht ausreichend. Des weiteren führt das Wickelband zu einer erheblichen Verkürzung der Lebensdauer der Kabelisolierung durch Versprödung. Die hohe Schrumpfneigung ist durch den zu niedrigen Schmelzindex des Compounds bedingt. Auch bei höherem Schmelzindex der Rohstoffe sind Probleme zu erwarten, obwohl dadurch der Schrumpf deutlich geringer wird, denn eine Thermofixierung ist trotz des geringen Erweichungspunktes der Folie in der genannten Schrift nicht vorsehen. Da das Produkt keine signifikante Abrollkraft aufweist, ist es kaum auf Drahtbündeln applizierbar. Der Fogging-Wert liegt bei 73 % (vermutlich bedingt durch das Paraffinwachs).

### Vergleichsbeispiel 3

Das Beispiel 1 der EP 0 953 599 A1 wird nachgearbeitet.

Die Herstellung des Compounds wird wie beschrieben auf einem Einschneckenlaborextruder gemischt:

| | |
|---|---|
| 85 phr | Lupolex 18 E FA, |
| 6 phr | Escorene UL 00112, |
| 9 phr | Tuftec M-1943, |
| 63 phr | Magnifin H 5, |
| 1,5 phr | Magnesiumstearat, |
| 11 phr | Novaexcel F 5, |
| 4 phr | Seast 3 H, |
| 0,2 phr | Irganox 1010, |
| 0,2 phr | Tinuvin 622 LD, wobei eine deutliche Freisetzung von Phosphin zu riechen ist. |

Die Folienherstellung erfolgt auf einer Laborblasanlage.

Die Folie weist jedoch eine große Zahl an Füllstoffstippen und kleinen Löchern auf und die Blase reißt während des Versuchs mehrfach ab. Die Durchschlagsspannung streut stark von 0 bis 3 kV/100 p. Daher wird das Granulat zur weiteren Homogenisierung im Extruder erneut aufgeschmolzen und granuliert. Der jetzt erhaltene Compound weist nur noch eine geringe Anzahl an Stippen auf. Beschichtung und Schneiden erfolgt analog Beispiel 1.

Das selbstklebende Wickelband zeichnet sich auf Grund der Verwendung von rotem Phosphor durch sehr gut Flammfestigkeit aus. Da das Produkt keine Abrollkraft aufweist, ist es kaum auf Drahtbündeln applizierbar. Die Wärmestandsbeständigkeit ist wegen des niedrigen Schmelzpunktes unzureichend.

### Vergleichsbeispiel 4

Auf einen textilen Träger vom Typ Vlies-Faden-Nähgewirke Maliwatt (80 g/m², Feinheit 22, schwarz, Dicke ca. 0,3 mm) wird mittels Düsenbeschichtung eine UV-vernetzbare Acrylat-Hotmelt-Klebemasse vom Typ Acronal DS 3458 bei 50 m/min aufgetragen. Die Temperaturbelastung des Trägers wird mittels einer gekühlten Gegendruckwalze reduziert. Der Masseauftrag beträgt ca. 65 g/m². Eine geeignete Vernetzung wird in-line vor der Aufwicklung durch Bestrahlung mit einer UV-Anlage erreicht, die mit 6 Mitteldruck-Hg-Lampen à 120 W/cm ausgestattet ist. Die Ballen werden im Scherenschnitt (zwischen einem Satz paarweise leicht versetzter rotierender Messer) zu Rollen auf Standard-3-Zoll-Kerne konfektioniert.

Dieses Wickelband zeichnet sich durch gute klebtechnische Eigenschaften sowie durch eine sehr gute Kompatibilität zu verschiedenen Kabelisolierungsmaterialien (PVC, PE, PP) und Rillrohren aus. Aus anwendungstechnischer Sicht sind jedoch die hohe Dicke und die fehlende Handeinreißbarkeit sehr nachteilig.

### Vergleichsbeispiel 5

Das Beispiel 1 der WO 00/71634 A1 wird nachgearbeitet.

Folgende Mischung wird in einem Kneter hergestellt:

| | |
|---|---|
| 80,8 phr | ESI DE 200, |
| 19,2 phr | Adflex KS 359 P, |
| 30,4 phr | Calciumcarbonat-Masterbatch SH3, |
| 4,9 phr | Petrothen PM 92049, |
| 8,8 phr | Antimonoxid TMS und |
| 17,6 phr | DE 83-R. |

Der Compound wird auf einer Cast-Laboranlage zu Flachfolie verarbeitet, Corona vorbehandelt, 20 g/m² JB 720 beschichtet, auf Stangen mit 3-Zoll-Kern gewickelt und durch Abstechen mit feststehender Klinge (Vorschub von Hand) geschnitten.

Dieses Wickelband zeichnet sich durch PVC-ähnliches mechanisches Verhalten aus, dass heißt hohe Flexibilität und gute Handeinreißbarkeit. Nachteilig ist der Einsatz von bromhaltigen Flammschutzmitteln. Des weiteren ist die Wärmeformbeständigkeit bei Temperaturen oberhalb von 95 °C gering, so dass die Folie bei den Alterung- und Verträglichkeitstesten schmilzt.

Eigenschaften der Vergleichsbeispiele

| | Vergleichsbeispiel 1 | Vergleichsbeispiel 2 | Vergleichsbeispiel 3 | Vergleichsbeispiel 4 | Vergleichsbeispiel 5 |
|---|---|---|---|---|---|
| Foliendicke [mm] | 0,08 | 0,15 | 0,20 | 0,29 | 0,125 |
| Klebkraft Stahl [N/cm] | 1,8 | 2,0 | 1,9 | 5,1 | 2,3 |
| Klebkraft auf eigener Rückseite [N/cm] | 1,6 | 1,8 | 1,4 | 1,5 | 1,2 |
| Abrollkraft [N/cm] | 2,0 | 1,9 | 1,7 | 3,5 | 1,5 |
| Reißkraft* [N/cm] | 15 | 22,3 | 44,0 | 51,3 | 22,5 |
| Reißdehnung* [%] | 150 | 92 | 720 | 72 | 550 |
| *Kraft* bei 1 % Dehnung [N/cm] | 1,0 | 4,3 | 5,9 | 5,2 | 0,46 |
| Kraft bei 100 % Dehnung [N/cm] | 14,0 | - | 19,8 | - | 6,3 |
| Reißdehnung* nach 3000@105°C >100% | versprödet | ja | ja | nicht versprödet | versprödet |
| Kompatibilität mit PE-und PP-Kabeln 3000h @ 105 °C | nein | Kabel versprödet | Tape brüchig | ja | Tape brüchig |
| Handeinreißbarkeit | +++ | - | - | - | + |
| Durchschlagspannung [kV/100µm] | 4 | 3 | 3 | 2 | 4 |
| Fogging-Wert | 29 | 73 | 63 | 99 | 73 |
| Halogenfrei | nein | ja | ja | ja | nein |
| Brandtest auf PE und PP-Kabeln | OK | OK | OK | OK | OK |
| Kältetest - 40 °C | Nicht OK | OK | OK | OK | Nicht OK |
| Weißbruch | nein | ja | ja | nein | ja |

| | | | | | |
|---|---|---|---|---|---|
| *an mit Klingen geschnittenen Mustern | | | | | |

## Patentansprüche

1. Leicht reißbares halogenfreies Wickelband bestehend aus einer Folienschicht sowie einer Klebstoffschicht, wobei die Folie ein Copolymer aus
(a) α-Olefin der Formel R-CH=CH₂, wobei R Wasserstoff oder ein Alkylrest mit 1 bis 10 Kohlenstoffatomen ist, und
(b) eine α,ß-ethylenisch ungesättigte Carbonsäure aus 3 bis 8 Kohlenstoffatomen sowie (c) optional ein weiteres monoethylenisch ungesättigtes Monomer, wobei die Carbonsäuregruppen des Copolymers zu 10 bis 90 % durch Neutralisation mit Metallionen substituiert sind, enthält, wobei
der Anteil an Copolymer in der Folie mindestens 50 Gew.-% beträgt und wobei die Folienschicht des Wickelbandes vernetzt ist, vorzugsweise durch ionisierende Strahlung oder Modifizierung eines Polymers mit Silangruppen und wobei die Folienschicht durch Blasextrusion hergestellt ist.

2. Wickelband nach Anspruch 1, **dadurch gekennzeichnet, dass** das Metallion des Copolymers ein- bis dreiwertig ist, vorzugsweise den Gruppen I, II ,III, IV-A und VII des Periodensystems entstammt, besonders bevorzugt aus der Gruppe der Alkalimetalle, insbesondere Natrium.

3. Wickelband nach zumindest einem der vorhergehenden Ansprüche, **dadurch gekennzeichnet, dass**
das Längsstreckverhältnis (Verhältnis Wickelgeschwindigkeit der Folie zu Geschwindigkeit der Schmelze in der Düse) 2 bis 25 vorzugsweise von 5 bis 10 beträgt,
die Frostlinie kleiner als 160 cm ist,
das Längsstreckverhältnis dividiert durch die Frostlinie ist größer als 0,1 cm⁻¹ vorzugsweise größer als 0,2 cm⁻¹ ist,
das Aufblasverhältnis im Bereich von 1 bis 4 vorzugsweise von 1,8 bis 2,5 liegt und/oder
der Düsenspalt im Bereich von 1 bis 1,6 mm liegt.

4. Wickelband nach zumindest einem der vorhergehenden Ansprüche, **dadurch gekennzeichnet, dass** die Reißfestigkeit nach Elmendorf in Längsrichtung mindestens das Doppelte, vorzugsweise mindestens das Vierfache der Reißfestigkeit in Querrichtung beträgt.

5. Wickelband nach zumindest einem der vorhergehenden Ansprüche, **dadurch gekennzeichnet, dass**
Dicke der Folienschicht von 30 bis 180 µm, insbesondere 55 bis 100 µm,
Kraft in Laufrichtung bei 1 % Dehnung 0,6 bis 4 N/cm,
Kraft bei 100 % Dehnung von 5 bis 20 N/cm,
Reißdehnung 200 bis 1000 % vorzugsweise 30 bis 400 %,
Reißkraft 6 bis 40 vorzugsweise 8 bis 15 N/cm und/oder
Durchschlagsspannung mindestens 5 kV/100 µm
beträgt.

6. Wickelband nach zumindest einem der vorhergehenden Ansprüche, **dadurch gekennzeichnet, dass**
zwischen Folien- und Kleberschicht eine Primerschicht vorhanden ist,
die Menge der Kleberschicht 10 bis 40 g/m², vorzugsweise 18 bis 28 g/m² beträgt, die Klebkraft auf Stahl 1,5 bis 3 N/cm,
die Abrollkraft 1,2 bis 6,0 N/cm bei 300 mm/min Abrollgeschwindigkeit, bevorzugt 1,6 bis 4,0 N/cm, besonders bevorzugt 1,8 bis 2,5 N/cm, und/oder die Holding Power mehr als 150 min beträgt.

7. Wickelband nach zumindest einem der vorherigen Ansprüche, **dadurch gekennzeichnet, dass** die Wickelfolie eine lösungsmittelfreie Haftklebemasse aufweist, welche durch Coextrusion, Schmelzbeschichtung oder Dispersionsbeschichtung erzeugt wird, bevorzugt einen Dispersionshaftkleber, wobei diese Klebemasse vermittels einer Flamm- oder Coronavorbehandlung oder einer Haftvermittlerschicht, welche durch Coextrusion oder Beschichtung aufgebracht wird, mit der Oberfläche der Trägerfolie verbunden ist.

8. Wickelband nach zumindest einem der vorherigen Ansprüche, **dadurch gekennzeichnet, dass** die Haftklebemasse auf Polyacrylat-Basis ist

9. Wickelband nach zumindest einem der vorherigen Ansprüche, **dadurch gekennzeichnet, dass** es schwarz ist

10. Wickelband nach zumindest einem der vorherigen Ansprüche, **dadurch gekennzeichnet, dass** die Wickelfolie weichmacherfrei ist oder der Weichmachergehalt so niedrig ist, dass der Fogging-Wert über 90 % liegt.

11. Wickelband nach zumindest einem der vorherigen Ansprüche, **dadurch gekennzeichnet, dass** die copolymerhaltige Folienschicht mit einem weiteren Polymer, insbesondere einem auf Ethylenbasis, abgemischt ist.

12. Wickelband nach zumindest einem der vorherigen Ansprüche, **dadurch gekennzeichnet, dass** die copolymerhaltige Folienschicht mit einer weiteren Folienschicht coextrudiert ist, welche ein Polymer, insbesondere eines auf Ethylenbasis, enthält, wobei das Polymer vorzugsweise einen Schmelzindex von weniger als 10 g/10 min, insbesondere von weniger als 6 g/10 min, aufweist.

13. Wickelband nach zumindest einem der vorherigen Ansprüche, **dadurch gekennzeichnet, dass** die Klebemasseschicht vernetzt ist durch ionisierender Strahlung oder Modifizierung eines Polymers mit Silangruppen.

14. Verfahren zur Herstellung eines Wickelbandes nach zumindest einem der vorherigen Ansprüche, wobei
• die Wickelfolie zu Stangen gewickelt wird, welche dann zur Erhöhung der Abrollkraft getempert und anschließend zu Rollen geschnitten werden, wobei die Abrollkraft des so hergestellten Materials bei 300 mm/min vorzugsweise um mindestens 50 % höher liegt als ohne eine solche Maßnahme, oder
• die Wickelfolie zur Erhöhung der Abrollkraft einer Flamm- oder Coronabehandlung unterzogen wird oder mit einer polaren Coextrusionsschicht versehen wird und anschließend zu Rollen verarbeitet wird, wobei die Abrollkraft des so hergestellten Materials bei 300 mm/min vorzugsweise um mindestens 50 % höher liegt als ohne eine solche Maßnahme oder,
• die Wickelfolie durch ein Verfahren geschnitten wird, welches durch raue Schnittkanten zur leichteren Handeinreißbarkeit führt, wobei die Bruchdehnung der so geschnittenen Wickelfolienrollen vorzugsweise um mindestens 30 % niedriger liegt als beim Schnitt mit scharfen Klingen,
• die Wickelfolie auf einem Abstechautomaten mit definierter Messervorschubgeschwindigkeit geschnitten wird,
• die Wickelfolie auf einem Kern mit 30 bis 40 mm Innendurchmesser, vorzugsweise aus Pappe, gewickelt wird.

15. Verwendung eines Wickelbandes nach zumindest einem der vorherigen Ansprüche zum Bündeln, Schützen, Kennzeichnen, Isolieren oder Abdichten von Lüftungsrohren oder Drähten oder Kabeln und zum Ummanteln von Kabelsätzen in Fahrzeugen oder Feldspulen für Bildröhren.

16. Leicht reißbares halogenfreies Wickelband bestehend aus einer Folie aus einem Copolymer aus
(a) α-Olefin der Formel R-CH=CH₂, wobei R Wasserstoff oder ein Alkylrest mit 1 bis 10 Kohlenstoffatomen ist, und
(b) eine α,ß-ethylenisch ungesättigte Carbonsäure aus 3 bis 8 Kohlenstoffatomen sowie (c) optional ein weiteres monoethylenisch ungesättigtes Monomer, wobei die Carbonsäuregruppen des Copolymers zu 10 bis 90 % durch Neutralisation mit Metallionen substituiert sind, enthält, wobei
der Anteil an Copolymer in der Folie mindestens 50 Gew.-% beträgt und wobei die Folienschicht des Wickelbandes vernetzt ist, vorzugsweise durch ionisierende Strahlung oder Modifizierung eines Polymers mit Silangruppen und wobei die Folienschicht durch Blasextrusion hergestellt ist.

## Claims

1. Easy-tear, halogen-free winding tape composed of a film layer and of an adhesive layer, the film comprising a copolymer of
(a) α-olefin of the formula R-CH=CH₂, where R is hydrogen or an alkyl radical having 1 to 10 carbon atoms, and
(b) an α,ß-ethylenically unsaturated carboxylic acid of 3 to 8 carbon atoms,
and (c) optionally a further monoethylenically unsaturated monomer, 10 to 90% of the carboxylic acid groups of the copolymer being substituted by metal ions as a result of neutralization,
the fraction of copolymer in the film being at least 50% by weight and the film layer of the winding tape having been crosslinked, preferably by ionizing radiation or by modification of a polymer with silane groups, and the film layer having been produced by blown-film extrusion.

2. Winding tape according to Claim 1, **characterized in that** the metal ion of the copolymer is monovalent to trivalent and comes preferably from groups I, II, III, IV-A and VII of the Periodic Table, more preferably from the group of the alkali metals, particularly sodium.

3. Winding tape according to at least one of the preceding claims, **characterized in that** the longitudinal draw ratio (ratio of film winding speed to melt speed in the die) is 2 to 25, preferably from 5 to 10,
the frost line is smaller than 160 cm,
the longitudinal draw ratio divided by the frost line is greater than 0.1 cm⁻¹, preferably greater than 0.2 cm⁻¹,
the blow-up ratio is situated in the range from 1 to 4, preferably from 1.8 to 2.5, and/or
the die gap is situated in the range from 1 to 1.6 mm.

4. Winding tape according to at least one of the preceding claims, **characterized in that** the tensile strength by the method of Elmendorf in the machine direction is at least twice, preferably at least four times, the tensile strength in the cross direction.

5. Winding tape according to at least one of the preceding claims, **characterized in that**
film layer thickness is from 30 to 180 µm, in particular 55 to 100 µm,
force at 1% elongation in machine direction is 0.6 to 4 N/cm,
force at 100% elongation is from 5 to 20 N/cm, breaking elongation is 200 to 1000%, preferably 30 to 400%,
tensile strength is 6 to 40, preferably 8 to 15 N/cm and/or
breakdown voltage is at least 5 kV/100 µm.

6. Winding tape according to at least one of the preceding claims, **characterized in that** there is a primer layer between film layer and adhesive layer,
the amount of the adhesive layer is 10 to 40 g/m², preferably 18 to 28 g/m², the bond strength to steel is 1.5 to 3 N/cm,
the unwind force is 1.2 to 6.0 N/cm at 300 mm/min unwind speed, preferably 1.6 to 4.0 N/cm, more preferably 1.8 to 2.5 N/cm, and/or
the holding powder is more than 150 min.

7. Winding tape according to at least one of the preceding claims, **characterized in that** the winding film comprises a solvent-free pressure-sensitive adhesive which is produced by coextrusion, melt coating or dispersion coating, preferably a pressure-sensitive dispersion adhesive, this adhesive being joined to the surface of the carrier film by means of flame or corona pretreatment or of an adhesion promoter layer which is applied by coextrusion or coating.

8. Winding tape according to at least one of the preceding claims, **characterized in that** the pressure-sensitive adhesive is polyacrylate-based.

9. Winding tape according to at least one of the preceding claims, **characterized in that** it is black.

10. Winding tape according to at least one of the preceding claims, **characterized in that** the winding film is plasticizer-free or the plasticizer content is so low that the fogging number is above 90%.

11. Winding tape according to at least one of the preceding claims, **characterized in that** the copolymer-containing film layer has been blended with a further polymer, in particular an ethylene-based polymer.

12. Winding tape according to at least one of the preceding claims, **characterized in that** the copolymer-containing film layer has been coextruded with a further film layer which comprises a polymer, in particular an ethylene-based polymer, the polymer having a melt index of preferably less than 10 g/10 min, in particular less than 6 g/10 min.

13. Winding tape according to at least one of the preceding claims, **characterized in that** the adhesive layer has been crosslinked by ionizing radiation or by modification of a polymer with silane groups.

14. Process for producing a winding tape according to at least one of the preceding claims, wherein
• the winding film is sound to logs, which then, to increase the unwind force, are conditioned by heat treatment and subsequently slit into rolls, the unwind force of the material thus produced at 300 mm/min being higher preferably by at least 50% than without such a measure, or
• the winding film, for the purpose of increasing the unwind force, is subjected to a flame or corona treatment or is provided with a polar coextrusion layer and is subsequently processed into rolls, the unwind force of the material thus produced at 300 mm/min being higher preferably by at least 50% than without such a measure, or
• the winding film is slit by a process which leads, as a result of rough slit edges, to easier hand tearability, the breaking elongation of the winding-film rolls thus slit being lower preferably by at least 30% than in the case of slitting with sharp blades,
• the winding film is slit on an automatic slitter with defined knife advancement speed,
• the winding film is sound on a core with an inside diameter of 30 to 40 mm, preferably of board.

15. Use of a winding tape according to at least one of the preceding claims for bundling, protecting, labeling, insulating or sealing ventilation pipes or wires or cables and for sheathing cable harnesses in vehicles or field coils for picture tubes.

16. Easy-tear, halogen-free winding tape composed of a film comprising a copolymer of
(a) α-olefin of the formula R-CH=CH₂, where R is hydrogen or an alkyl radical having 1 to 10 carbon atoms, and
(b) an α,β-ethylenically unsaturated carboxylic acid of 3 to 8 carbon atoms, and (c) optionally a further monoethylenically unsaturated monomer, 10 to 90% of the carboxylic acid groups of the copolymer being substituted by metal ions as a result of neutralization,
the fraction of copolymer in the film being at least 50% by weight and the film layer of the winding tape having been crosslinked, preferably by ionizing radiation or by modification of a polymer with silane groups, and the film layer having been produced by blown-film extrusion.

## Revendications

1. Bande à enrouler, exempte d'halogène, facile à déchirer, constituée par une couche de feuille ainsi qu'une couche adhésive, la feuille contenant un copolymère de
(a) une α-oléfine de formule R-CH=CH₂, R représentant hydrogène ou un radical alkyle comprenant 1 à 10 atomes de carbone, et
(b) un acide carboxylique α,β-éthyléniquement insaturé comprenant 3 à 8 atomes de carbone ainsi que
(c) éventuellement un autre monomère éthyléniquement monoinsaturé, les groupes acide carboxylique du copolymère étant substitués, à raison de 10 à 90%, par des ions métalliques par neutralisation
la proportion de copolymère dans la feuille étant d'au moins 50% en poids et la couche de feuille de la bande à enrouler étant réticulée, de préférence par un rayonnement ionisant ou par modification d'un polymère par des groupes silane et la couche de feuille étant produite par extrusion-soufflage.

2. Bande à enrouler selon la revendication 1, **caractérisée en ce que** l'ion métallique du copolymère est monovalent à trivalent, provient de préférence des groupes I, II, III, IV-A et VII du système périodique, de manière particulièrement préférée du groupe des métaux alcalins, de préférence le sodium.

3. Bande à enrouler selon au moins l'une quelconque des revendications précédentes, **caractérisée en ce que**
le rapport d'étirage longitudinal (rapport de la vitesse d'enroulement de la feuille à la vitesse de la masse fondue dans la filière) vaut 2 à 25, de préférence 5 à 10,
la ligne de givrage est inférieure à 160 cm,
le rapport d'étirage longitudinal divisé par la ligne de givrage est supérieur à 0,1 cm⁻¹, de préférence supérieur à 0,2 cm⁻¹,
le rapport de soufflage se situe dans la plage de 1 à 4, de préférence de 1,8 à 2,5 et/ou
la fente de la filière se situe dans la plage de 1 à 1,6 mm.

4. Bande à enrouler selon au moins l'une quelconque des revendications précédentes, **caractérisée en ce que** la résistance à la déchirure selon Elmendorf dans le sens longitudinal représente au moins le double, de préférence au moins le quadruple de la résistance à la déchirure dans le sens transversal.

5. Bande à enrouler selon au moins l'une quelconque des revendications précédentes, **caractérisée en ce que**
l'épaisseur de la couche de feuille est de 30 à 180 µm, en particulier de 55 à 100 µm,
la force dans le sens d'avancement, à un allongement de 1%, est de 0,6 à 4 N/cm,
la force à un allongement de 100% est de 5 à 20 N/cm, l'allongement à la déchirure est de 200 à 1000%, de préférence 30 à 400%,
la résistance à la déchirure vaut 6 à 40, de préférence 8 à 15 N/cm, et/ou
la tension de rupture est d'au moins 5 kV/100 µm.

6. Bande à enrouler selon au moins l'une quelconque des revendications précédentes, **caractérisée en ce qu'**une couche d'apprêt se trouve entre la couche de feuille et la couche adhésive,
la quantité de la couche adhésive est de 10 à 40 g/m², de préférence de 18 à 28 g/m², l'adhésivité sur l'acier est de 1,5 à 3 N/cm,
la force de déroulement est de 1,2 à 6,0 N/cm à une vitesse de déroulement de 300 mm/min, de préférence de 1,6 à 4,0 N/cm, de manière particulièrement préférée de 1,8 à 2,5 N/cm, et/ou
la résistance de collage est de plus de 150 min.

7. Bande à enrouler selon au moins l'une quelconque des revendications précédentes, **caractérisée en ce que** la feuille à enrouler présente une masse autoadhésive exempte de solvant, qui est produite par coextrusion, revêtement en masse fondue ou revêtement en dispersion, de préférence un autoadhésif en dispersion, cette masse adhésive étant assemblée à la surface de la feuille support par un prétraitement à la flamme ou au corona ou une couche de promoteur d'adhérence, qui est appliquée par coextrusion ou par revêtement.

8. Bande à enrouler selon au moins l'une quelconque des revendications précédentes, **caractérisée en ce que** la masse autoadhésive est à base de polyacrylate.

9. Bande à enrouler selon au moins l'une quelconque des revendications précédentes, **caractérisée en ce qu'**elle est noire.

10. Bande à enrouler selon au moins l'une quelconque des revendications précédentes, **caractérisée en ce que** la feuille à enrouler est exempte de plastifiant ou la teneur en plastifiant est tellement faible que la valeur de voile est supérieure à 90%.

11. Bande à enrouler selon au moins l'une quelconque des revendications précédentes, **caractérisée en ce que** la couche de feuille contenant le copolymère est mélangée avec un autre polymère, en particulier un polymère à base d'éthylène.

12. Bande à enrouler selon au moins l'une quelconque des revendications précédentes, **caractérisée en ce que** la couche de feuille contenant le copolymère est coextrudée avec une autre couche de feuille, qui contient un polymère, en particulier un polymère à base d'éthylène, le polymère présentant de préférence un indice de fusion inférieur à 10 g/10 min, en particulier inférieur à 6 g/10 min.

13. Bande à enrouler selon au moins l'une quelconque des revendications précédentes, **caractérisée en ce que** la couche de masse adhésive est réticulée par un rayonnement ionisant ou une modification d'un polymère par des groupes silane.

14. Procédé pour la production d'une bande à enrouler selon au moins l'une quelconque des revendications précédentes,
- la feuille à enrouler étant enroulée en barres qui sont alors traitées thermiquement pour augmenter la force de déroulement et ensuite coupées en rouleaux, la force de déroulement du matériau ainsi préparé à 300 mm/min étant de préférence supérieure d'au moins 50% à celle sans cette mesure, ou
- la feuille à enrouler étant soumise, pour augmenter la force de déroulement, à un traitement à la flamme ou au corona ou pourvue d'une couche de coextrusion polaire et ensuite transformée en rouleaux, la force de déroulement du matériau ainsi produit à 300 mm/min étant de préférence supérieure d'au moins 50% à celle sans cette mesure, ou
- la feuille à enrouler étant coupée par un procédé qui conduit, par des bords de coupe durs, à une aptitude à la déchirure à la main plus facile, l'allongement à la rupture des rouleaux de feuilles enroulées ainsi coupées étant de préférence inférieur d'au moins 30% à celui lors de la coupe avec des lames acérées,
- la feuille à enrouler étant coupée sur un automate de découpe à longueur à une vitesse d'avancement définie des couteaux,
- la feuille à enrouler étant enroulée sur un noyau d'un diamètre interne de 30 à 40 mm, de préférence en carton.

15. Utilisation d'une bande à enrouler selon au moins l'une quelconque des revendications précédentes pour empaqueter, protéger, caractériser, isoler ou fermer des tuyaux d'aération ou des fils ou des câbles et pour envelopper des ensembles de fils dans des véhicules ou des bobines de champ pour tubes cathodiques.

16. Bande à enrouler exempte d'halogène, facile à déchirer, constituée par une feuille en un copolymère de
(a) une α-oléfine de formule R-CH=CH₂, R représentant hydrogène ou un radical alkyle comprenant 1 à 10 atomes de carbone, et
(b) un acide carboxylique α,β-éthyléniquement insaturé comprenant 3 à 8 atomes de carbone ainsi que (c) éventuellement un autre monomère éthyléniquement monoinsaturé, les groupes acide carboxylique du copolymère étant substitués, à raison de 10 à 90%, par des ions métalliques par neutralisation
la proportion de copolymère dans la feuille étant d'au moins 50% en poids et
la couche de feuille de la bande à enrouler étant réticulée, de préférence par un rayonnement ionisant ou par modification d'un polymère par des groupes silane et
la couche de feuille étant produite par extrusion-soufflage.
